# EUROPÄISCHE PATENTSCHRIFT

(11) **EP 3 756 416 B1**
(45) Veröffentlichungstag und Bekanntmachung des Hinweises auf die Patenterteilung: **05.01.2022**
(21) Anmeldenummer: 19706599.8
(22) Anmeldetag: 20.02.2019
(51) Int. Cl.: H04W 88/08, H04W 92/12

(54) **HETEROGENE MOBILFUNKANORDNUNG ZUR VERSORGUNG ZUMINDEST EINER MOBILFUNKZELLE MIT MOBILFUNKDIENSTLEISTUNGEN**
HETEROGENEOUS MOBILE RADIO ARRANGEMENT FOR SUPPLYING AT LEAST ONE MOBILE RADIO CELL WITH MOBILE RADIO SERVICES
ENSEMBLE DE TÉLÉPHONIE MOBILE HÉTÉROGÈNE PERMETTANT D'ALIMENTER AU MOINS UNE CELLULE DE TÉLÉPHONIE MOBILE AVEC DES SERVICES DE TÉLÉPHONIE MOBILE

(30) Priorität: 21.02.2018 DE 102018103908
(43) Veröffentlichungstag der Anmeldung: 30.12.2020
(73) Patentinhaber: Telefonaktiebolaget LM Ericsson (publ), 164 83 Stockholm (SE)
(72) Erfinder: MOHR, Markus, 83022 Rosenheim Bayern (DE); BIEBER, Robert, 83024 Rosenheim Bayern (DE)
(74) Vertreter: Flach Bauer Stahl Patentanwälte Partnerschaft mbB
(86) Internationale Anmeldenummer: PCT/EP2019/054215
(87) Internationale Veröffentlichungsnummer: WO 2019/162326

(56) Entgegenhaltungen:
- WO-A1-2014/085345
- US-B1- 9 806 413
- US-B2- 9 472 956

## Beschreibung

Die Erfindung betrifft eine heterogene Mobilfunkanordnung zur Versorgung zumindest einer Mobilfunkzelle mit Mobilfunkdienstleistungen.

Derzeit eingesetzte Mobilfunkanordnungen umfassen eine Antennenanordnung, die von einer Basisstation mit Energie und Mobilfunksignalen versorgt wird. Die Antennenanordnung ist dabei in den meisten Fällen auf einem Antennenmast angebracht, um ein möglichst großes Gebiet mit Mobilfunkdienstleistungen versorgen zu können. Die Basisstation ist meistens am Boden angeordnet und über ein entsprechendes Speisekabel mit der Antennenanordnung verbunden. Eine solche Antennenanordnung umfasst noch zusätzliche Komponenten, die vom Betreiber der Mobilfunkanordnung gesteuert werden können. Beispielsweise kann der Down-Tilt-Winkel der Antennenanordnung im Betrieb an die jeweiligen Bedürfnisse angepasst werden, um die Zellgröße optimal einstellen zu können. Es ist auch möglich, dass der Betreiber einen Verstärker, insbesondere in Form eines Tower-Mounted-Amplifiers entsprechend ansteuert, z.B. ein bzw. ausschaltet. Die hierfür notwendigen Steuersignale können an die Basisstation übertragen, ggf. umgesetzt und von dieser an die zu steuernden Geräte auf dem Antennenmast weitergeleitet werden. Hierfür könnte prinzipiell ein entsprechendes Kabel zu den anzusteuernden Geräten gelegt werden. In der Praxis ist die Verwendung einer solchen separaten Steuerleitung aus verschiedenen Gründen problematisch. Einerseits muss eine solche Steuerleitung zusätzlich montiert werden, was Zeit und auch Geld kostet. Andererseits sind die Antennenmasten heute häufig bereits sehr dicht belegt, so dass eine solche zusätzliche Steuerleitung nicht oder nur mit erheblichen Aufwand an bestehende Antennenmasten angebracht werden kann. Nicht zu unterschätzen ist außerdem die Problematik, dass von diesen Steuerleitungen, bei beispielsweise unzureichender Schirmung, noch Störsignale in die Antennenanordnung einkoppeln können, worunter die Qualität der Mobilfunkdienstleistungen leiden könnte.

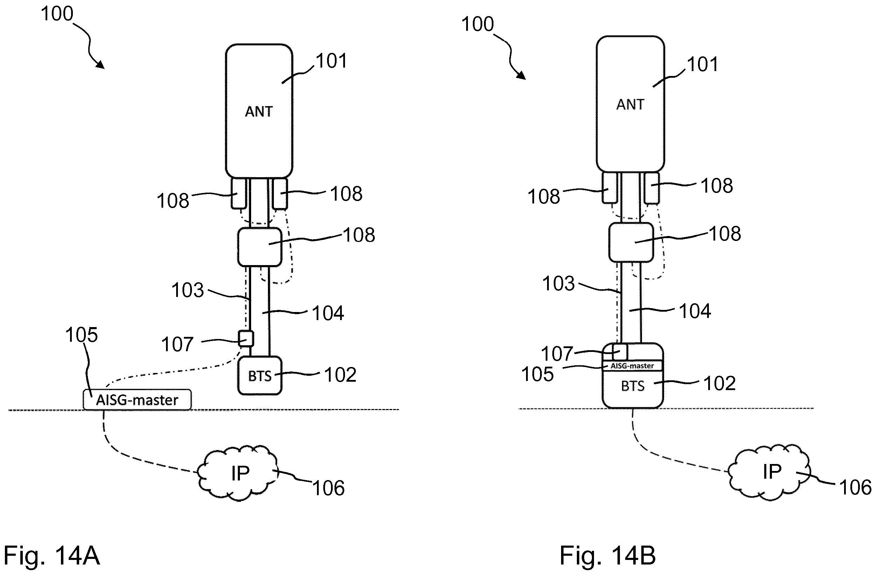

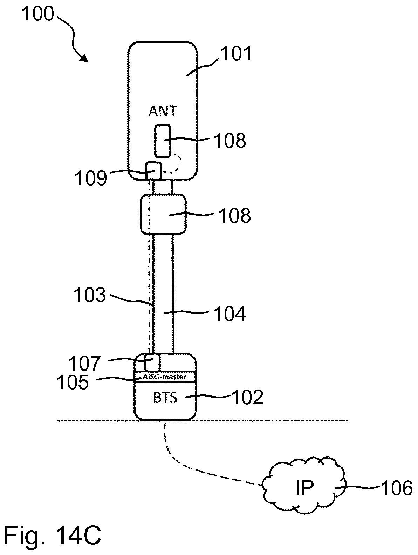

Aus diesen Gründen wurde der AISG-Standard (engl. Antenna Interface Standards Group; http://www.aisg.org.uk/ | z.B. AISGV2* und AISGv3*) ins Leben gerufen. Dieser Standard sieht vor, dass die Steuersignale u.a. über dieselbe Speiseleitung übertragen werden, über die auch die Mobilfunksignale und die entsprechende Versorgungsspannung zu der Antennenanordnung übertragen werden. Ein so genannter AISG-Master steuert dabei einen oder mehrere AISG-Slaves an, die am Antennenmast bzw. direkt in der zumindest einen Antennenanordnung angeordnet sind. Das entsprechende Steuersignal wird dabei über ein On/Off-Keying-Verfahren über die Speiseleitung übertragen. Hierfür ist eine Frequenz von 2,176 MHz vorgesehen, die unterhalb der Frequenzen liegt, die für Mobilfunkdienstleistungen verwendet werden. Der Pegel für das On/Off-Keying-Signal liegt bei max. + 5dBm (On-Signal) und -40 dBm (Off-Signal). Die entsprechenden Steuerdaten können dabei beispielsweise mit einer Datenrate von 9,6 kBit/s übertragen werden. In den Figuren 14A, 14B und 14C ist ein beispielhafter Aufbau gezeigt, der die Funktionsweise einer Steuerung über AISG-Befehle verdeutlicht. Die dort gezeigte Mobilfunkanordnung 100 umfasst eine Antennenanordnung 101 und eine Basisstation 102. Die Basisstation 102 dient zum Erzeugen von Mobilfunksignalen (HF-Signale), die über die Antennenanordnung 101 ausgesendet werden. Umgekehrt können Mobilfunksignale, die von der Antennenanordnung 101 empfangen werden an die Basisstation 102 zur weiteren Auswertung bzw. Verarbeitung übermittelt werden. Über ein Speisekabel 103 findet eine Verbindung zwischen der Basisstation 102 und der Antennenanordnung 101 statt. Zur Steuerung von zusätzlichen Geräten 108, die u.a. an dem Antennenmast 104 angeordnet sind, wie beispielweise TMAs (engl. Tower Mounted Amplifiers), ACU (engl. Antenna Control Unit) und RET-Einheiten (z.B. Antenna Tilt Control Devices), kann ein AISG-Master 105 verwendet werden. Dieser AISG-Master 105 ist beispielsweise mit einem übergeordneten IP-Netzwerk 106 verbunden. Über dieses übergeordnete IP-Netzwerk 106 kann der Mobilfunkbetreiber entsprechende Steuerbefehle an den AISG-Master 105 übertragen. In Figur 14A ist der AISG-Master 105 beispielsweise in der Nähe der Basisstation 102 angeordnet. In den Figuren 14B und 14C ist der AISG-Master 105 in die Basisstation 102 integriert. In Figur 14A ist noch ein AISG-Umsetzer 107 dargestellt, der u.a. auch als AISG-SBT (engl. AISG-Smart Bias Tee) bezeichnet werden kann. Der AISG-Master 105 überträgt die Steuerdaten meist über eine RS-485-Schnittstelle an den AISG-Umsetzer 107. Der AISG-Umsetzer 107 wandelt diese Daten in ein On/Off-Keying-Signal um und überträgt dieses über die Speiseleitung 103. An dem Antennenmast 104 sind die entsprechenden zu steuernden Geräte 108 angeordnet, die auch als AISG-Slaves 108 bezeichnet werden können. Diese AISG-Slaves 108 empfangen die Steuerbefehle von dem AISG-Master 105 und führen die entsprechenden Operationen aus.

In Figur 14B ist dabei dargestellt, dass der AISG-Umsetzer 107 ebenfalls in der Basisstation 102 integriert ist, wobei die Basisstation 102 an das übergeordnete IP-Netzwerk 106 angeschlossen ist. In Figur 14C ist weiterhin dargestellt, dass beispielsweise die AISG-Slaves 108 in der Antennenanordnung 101 integriert sind, und dass es noch einen weiteren AISG-Umsetzer 109 gibt, der ebenfalls in der Antennenanordnung 101 angeordnet ist.

Die US 9 472 956 B2 beschreibt ein Verfahren zum Betrieb eines zellularen Funkgeräts, wobei ein erstes Stromversorgungssignal von einer Stromversorgung zu einer drahtlosen Leistungseinheit zumindest teilweise über ein Stromkabel übertragen wird. Ein zweites Stromversorgungssignal wird von der drahtlosen Leistungseinheit an das zellulare Funkgerät übertragen, um das zellulare Funkgerät mit Strom zu versorgen. Daten werden von einer Basisbandeinheit, die mit dem zellularen Funkgerät verbunden ist, zumindest teilweise über ein Datenkabel an einen drahtlosen Transceiver übertragen. Diese Daten werden drahtlos vom drahtlosen Transceiver an das zellulare Funkgerät übertragen. Die Daten werden dann über eine Antenne ausgesendet, die mit dem zellularen Funkgerät gekoppelt ist.

Eine beispielhafte Mobilfunkanordnung ist auch aus der US 2015/0244069 A1 bekannt. Antennen sind über ein Speisekabel mit einer Basisstation verbunden. Steuersignale für eine RET-Einheit, die an den Antennen montiert ist, werden ebenfalls über das Speisekabel übertragen. Bei diesen Steuersignalen handelt es sich um AISG-Signale.

Die DE 10 2008 053 850 A1 beschreibt eine Mobilfunkanordnung, die mehrere Basisstationen und mehrere Antenneneinrichtungen umfasst, wobei jeweils eine Antenneneinrichtung einer Basisstation zugeordnet ist. Die Basisstationen nutzen dabei ein Speisekabel gemeinsam, um hierüber mit der Antenneneinrichtung und weiteren Geräten diese Antenneneinrichtung zu kommunizieren. Für die Kommunikation mit den weiteren Geräten wird der AISG-Standard verwendet. Eine basisstationsseitige Multiplexer-Schaltung und eine antennenseitige Multiplexer-Schaltung stellen sicher, dass die entsprechenden Steuersignale (AISG-Signale) von einer Basisstation auch der richtigen Antenneneinrichtung zugeführt werden und umgekehrt.

Aus der US 2012/0038513 A1 ist ein Kommunikationssystem bekannt, um Steuersignale einer Mobilfunkanordnung zukommen zu lassen. Über diese Steuersignale können Geräte der Mobilfunkanordnung über den AISG-Standard gesteuert werden. Das Kommunikationssystem umfasst einen Server, der Befehle von einem Nutzer entgegennimmt und diese entsprechend umsetzt und an die Mobilfunkanordnung versendet.

Ein Nachteil bei der Verwendung des AISG-Standards, welcher beispielsweise in der Mobilfunkanordnung gemäß den Figuren 14A bis 14C verwendet werden kann, liegt darin, dass Erweiterungen und Änderungen des AISG-Standards sehr langwierig sind und letztendlich nur der Hersteller der entsprechenden Basisstation / des AISG-Masters entscheidet, welche Version des AISG-Standards und welche Gerätetypen des AISG-Standards er unterstützt.

Dies führt zu der Problematik, dass zusätzliche Geräte, die auf dem Antennenmast für eine zusätzliche wünschenswerte Funktionalität sorgen würden, nicht einfach über bestehende Steuerverbindungen angesteuert werden können. So sind in dem AISG-Standard die ansteuerbaren AISG-Slaves abschließend aufgeführt, wobei der Einsatz von neuen AISG-Slaves eine Änderung des AISG-Standards erforderlich machen würde, wobei wiederum letztlich der Hersteller der Basisstation / des AISG-Masters, die neueste Version des AISG-Standards unterstützen müsste, damit zusätzliche Geräte betrieben werden können. Diese aufwendige Standardisierung wird allerdings nicht grundsätzlich durchgeführt, weshalb die gewünschten zusätzlichen Geräte nicht installiert werden können, auch weil, wie eingangs erwähnt, schlicht kein Platz für weitere Steuerkabel auf dem Antennenmast vorhanden ist, bzw. weil der Betrieb der neuen Geräte über neue Steuerkabel die zu übertragenden Mobilfunksignale stören würde.

Es ist daher die Aufgabe der hier vorliegenden Erfindung, eine Möglichkeit zu schaffen, um eine bestehende Mobilfunkanordnung möglichst einfach derart aufzurüsten, dass zusätzliche Geräte, die im AISG-Standard nicht aufgeführt sind, auf sehr einfache Weise installiert und angesteuert werden können. Diese Aufgabe wird durch die erfindungsgemäße heterogene Mobilfunkanordnung gemäß dem Anspruch 1 gelöst. In den Unteransprüchen sind vorteilhafte Weiterbildungen der erfindungsgemäßen heterogenen Mobilfunkanordnung angegeben.

Die erfindungsgemäße heterogene Mobilfunkanordnung dient zur Versorgung zumindest einer Mobilfunkzelle mit Mobilfunkdienstleistungen (z.B. Sprache, Daten). Sie umfasst zumindest eine Antennenanordnung, wobei die zumindest eine Antennenanordnung eine Vielzahl von Strahlerelementen umfasst, die in einem Antennengehäuse (Radom) angeordnet sind. Die Antennenanordnung ist insbesondere dazu ausgebildet, um in zwei linearen, zirkularen oder elliptischen Polarisationen zu senden und/oder zu empfangen. Es ist bevorzugt zumindest ein Antennenmast oder ein Antennenhalter vorgesehen, an dem die zumindest eine Antennenanordnung befestigt ist. Weiterhin ist zumindest ein geschirmtes Speisekabel (z.B. koaxialer Aufbau mit zumindest einem Innenleiter und einem durch zumindest ein Dielektrikum in Abstand gehaltenen Außenleiter) vorgesehen, welches ein erstes und ein gegenüberliegendes zweites Ende umfasst. Über dieses geschirmte Speisekabel wird die zumindest eine Antennenanordnung mit elektrischer Energie versorgt. Über dieses geschirmte Speisekabel sind auch ein AISG-Signal und Mobilfunksignale übertragbar. Um zusätzliche Endgeräte anschließen zu können, sind neben einem solchen zumindest einen ersten IP-Gerät noch zumindest ein erster und ein zweiter IP-Umsetzer vorgesehen, wobei beide IP-Umsetzer jeweils einen IP-Anschluss und jeweils zumindest einen Signalleitungsanschluss aufweisen. Der IP-Umsetzer kann auch als IP-SBT (eng. Internet-Protocol Smart Bias Tee) bezeichnet werden. Der erste IP-Umsetzer ist mit seinem IP-Anschluss zumindest mittelbar (über einen Switch/Router) mit einem übergeordneten IP-Netzwerk verbindbar oder verbunden, wohingegen der zweite IP-Umsetzer mit seinem IP-Anschluss mit dem zumindest einen ersten IP-Gerät verbunden ist. Der Signalleitungsanschluss des ersten IP-Umsetzers und des Signalleitungsanschlusses des zweiten IP-Umsetzers sind unmittelbar oder mittelbar mit dem zumindest einen geschirmten Speisekabel elektrisch verbunden, wobei über dieses geschirmte Speisekabel auch das AISG-Signal und die Mobilfunksignale übertragbar sind und wobei über dieses geschirmte Speisekabel auch die elektrische Energieversorgung der zumindest einen Antennenanordnung sichergestellt ist. Dadurch können Daten, insbesondere IP-Daten, zwischen dem übergeordneten IP-Netzwerk und dem zumindest einen ersten IP-Gerät ausgetauscht werden.

Besonders vorteilhaft ist die Tatsache, dass zusätzlich ein erster und ein zweiter IP-Umsetzer verwendet werden, die an das geschirmte Speisekabel angeschlossen sind. Dadurch kann das bereits vorhandene geschirmte Speisekabel verwendet werden, um zusätzliche IP-Geräte mit einem übergeordneten IP-Netzwerk zu verbinden. Ein zusätzliches Kabel, welches nicht in allen Konstellationen installiert werden kann und die Mobilfunksignale außerdem stören kann, ist nicht notwendig. Aufgrund der Tatsache, dass IP-Umsetzer (engl. Internet Protocol) und IP-Geräte verwendet werden, kann auf standardisierte Protokolle zurückgegriffen werden und es können bereits entwickelte IP-Geräte eingesetzt werden.

Zur Erweiterung der Funktionalität der Mobilfunkanordnung ist eine Erweiterung des AISG-Standards nicht mehr zwingend notwendig. Die AISG-Umgebung muss nicht geändert werden. Der Wortlaut "heterogene Mobilfunkanordnung" bedeutet, dass über das zumindest eine Speisekabel einerseits neuartige Endgeräte angesteuert werden können, deren Steuerbefehle nicht über das AISG-Protokoll übertragbar sind. Hierzu gehört beispielsweise die Möglichkeit, dass über das Speisekabel entsprechende IP-Daten (in unterschiedlicher Modulation) übertragbar sind. Gleichzeitig soll über das Speisekabel zumindest eine Spannungsversorgung, insbesondere in Form einer Gleichspannung für die zumindest eine Antennenanordnung erfolgen können. Über das geschirmte Speisekabel können außerdem noch Mobilfunksignale und AISG-Signale übertragen werden. Bevorzugt sind daher über das geschirmte Speisekabel IP-Daten, eine Versorgungsspannung, AISG-Signale und Mobilfunksignale übertragbar. Unter dem Wortlaut "IP-Umsetzer" ist zu verstehen, dass dieser insbesondere eine Layer-1-Konvertierung zwischen seinem IP-Anschluss und seinem zumindest einen Signalleitungsanschluss durchführt. Dies gilt sowohl für den ersten IP-Umsetzer als auch für den zumindest einen zweiten IP-Umsetzer. Eine Layer-1-Konvertierung bezieht sich auf das OSI-Schichtenmodell.

Die zumindest zwei IP-Umsetzer führen insbesondere eine Umsetzung eines Ethernet-Protokolls (z.B. IEEE 802.3) in ein Narrowband-IOT-Protokoll (z.B. IEEE P1901.2) durch.

Der erste und der zweite IP-Umsetzer sind insbesondere dazu ausgebildet, untereinander IP-Daten über das zumindest eine geschirmte Speisekabel auszutauschen, wobei die IP-Daten mit einer Frequenz von weniger als 20 MHz, 15 MHz, 10 MHz, 5 MHz, 1 MHz, 750 KHz oder 500 KHz übertragen werden. Dadurch ist sichergestellt, dass die Mobilfunksignale nicht beeinflusst werden. Die Daten werden über das Speisekabel in keinem IP-Protokoll, sondern in einem Narrowband-IOT-Protokoll übertragen. Dennoch wird im Folgenden durchgehend von IP-Daten gesprochen.

In einer weiteren bevorzugten Ausführungsform der Erfindung sind der erste und der zumindest eine zweite IP-Umsetzer dazu ausgebildet, die IP-Daten über das geschirmte Speisekabel untereinander auszutauschen, wobei der Signalpegel niedriger ist als der Signalpegel eines AISG-Signals, das ebenfalls über dasselbe zumindest eine geschirmte Speisekabel übertragbar ist. Insbesondere sollte der Signalpegel kleiner als -40 dBm sein, weil der Off-Pegel eines On/Off-Keying-Signals (AISG-Signal) diesen Pegel als kleinsten Pegel aufweisen kann. Grundsätzlich wäre es hier auch möglich, dass die IP-Daten nicht in dem Frequenzbereich übertragen werden, in welchen das AISG-Signal übertragen wird. Durch eine entsprechende Filterung könnte dieses Ziel erreicht werden

Bei einer weiteren erfindungsgemäßen Ausführungsform handelt es sich bei dem IP-Gerät um einen 5G-Repeater, wobei dieser an dem Antennenmast oder an dem Antennenhalter mit der zumindest einen Antennenanordnung angeordnet ist. Er wird in diesem Fall über den zweiten IP-Umsetzer mit IP-Daten versorgt. Alternativ oder ergänzend kann auch noch ein weiterer 5G-Repeater vorgesehen sein, der an einem weiteren Antennenmast oder einem weiteren Antennenhalter angeordnet ist. Dieser weitere 5G-Repeater wird über ein weiteres Speisekabel mit Energie versorgt, wobei an dem Antennenmast oder Antennenhalter mit der zumindest einen Antennenanordnung eine Speiseantenne vorgesehen ist, die auf den weiteren 5G-Repeater an dem weiteren Antennenmast oder Antennenhalter gerichtet ist und diesen speist. Ergänzend oder alternativ ist noch ein weiterer erster IP-Umsetzer vorgesehen, der mit dem oder einem weiteren übergeordneten IP-Netzwerk verbunden ist. Ein weiterer zweiter IP-Umsetzer ist in dem 5G-Repeater integriert oder an diesem angeordnet. Die weiteren IP-Umsetzer sind dazu ausgebildet, über ihre Signalübertragungsanschlüsse und das weitere Speisekabel IP-Daten auszutauschen, wodurch der weitere 5G-Repeater mit dem weiteren übergeordneten IP-Netzwerk verbunden oder verbindbar ist.

In einer weiteren erfindungsgemäßen Ausführungsform ist noch zumindest eine Energieversorgungseinrichtung vorgesehen, die dazu ausgebildet ist, eine (geeignete) Versorgungsspannung (insbesondere eine Gleichspannung) zu erzeugen bzw. bereitzustellen. Diese Energieversorgungseinrichtung ist mittelbar oder unmittelbar mit einem ersten Ende des zumindest einen geschirmten Speisekabels verbunden, wobei ein zweites Ende des zumindest einen Speisekabels mittelbar oder unmittelbar mit der zumindest einen Antennenanordnung verbunden ist, worüber diese mit elektrischer Energie versorgbar ist. Die Energieversorgungseinrichtung kann beispielsweise auch in eine Basisstation integriert sein.

Der erste IP-Umsetzer ist dabei insbesondere zwischen der Energieversorgungseinrichtung und dem ersten Ende des zumindest einen geschirmten Speisekabels angeordnet, wobei er mit seinem zumindest einen Signalleitungsanschluss mittelbar oder unmittelbar mit dem ersten Ende des zumindest einen geschirmten Speisekabels verbunden ist. Der erste IP-Umsetzer ist (neben dem Ein- und Auskoppeln der modulierten IP-Pakete) dazu ausgebildet, die Versorgungsspannung von der Energieversorgungseinrichtung zu dem ersten Ende des zumindest einen geschirmten Speisekabels durch zu schleifen. Grundsätzlich wäre es auch möglich, dass der erste IP-Umsetzer in der Energieversorgungseinrichtung integriert ist. In diesem Fall wäre die Energieversorgungseinrichtung unmittelbar mit dem ersten Ende des zumindest einen geschirmten Speisekabels verbunden. Für den Fall, dass der erste IP-Umsetzer als separate Hardware neben der Energieversorgungseinrichtung ausgebildet ist, handelt es sich bei der Verbindung lediglich um eine mittelbare Verbindung. Der IP-Umsetzer ist auch dazu ausgebildet, AISG-Signale und Mobilfunksingale entsprechend durch zu schleifen.

In einem weiteren erfindungsgemäßen Ausführungsbeispiel ist der zweite IP-Umsetzer zwischen dem zweiten Ende des zumindest einen geschirmten Speisekabels und der zumindest einen Antennenanordnung angeordnet. Der zweite IP-Umsetzer ist mit seinem zumindest einen Signalleitungsanschluss mittelbar oder unmittelbar mit dem zweiten Ende des zumindest einen geschirmten Speisekabels verbunden und dazu ausgebildet, die Versorgungsspannung von dem zweiten Ende des zumindest einen geschirmten Speisekabels zu der zumindest einen Antennenanordnung durch zu schleifen. Auch in diesem Fall werden noch AISG-Signale und/oder Mobilfunksingale durchgeschleift.

In einer weiteren bevorzugten Ausführungsform umfasst der zweite IP-Umsetzer noch eine Versorgungseinrichtung, die auch als IP-Energieversorgungseinrichtung bezeichnet werden kann. Diese ist dazu ausgebildet, eine Versorgungsspannung aus dem zumindest einen geschirmten Speisekabel zu entnehmen, die Spannung optional anzupassen und dem IP-Gerät (an seinem IP-Anschluss) zur Verfügung zu stellen. Dies gelingt insbesondere über den Power-Over-Ethernet-Standard (IEEE 802.3AF bzw. 802.3AT).

Die erfindungsgemäße heterogene Mobilfunkanordnung umfasst insbesondere noch eine Basisstation, die zur Erzeugung der Mobilfunksignale in den entsprechenden Mobilfunkfrequenzen ausgebildet ist. Das zumindest eine geschirmte Speisekabel ist mit seinem ersten Ende mittelbar oder unmittelbar mit der Basisstation und mit seinem zweiten Ende mittelbar oder unmittelbar mit der zumindest einen Antennenanordnung verbunden. In diesem Fall ist vorzugsweise noch ein AISG-Master vorgesehen, der beispielsweise direkt in die Basisstation integriert sein kann. Er kann auch als separate Hardware neben der Basisstation ausgebildet sein. Dazu passend gibt es noch zumindest einen AISG-Slave, der in der zumindest einen Antennenanordnung integriert ist oder ganz allgemein an dem Antennenmast oder dem Antennenhalter angeordnet ist. AISG-Daten sind auf dem zumindest einen geschirmten Speisekabel zwischen dem AISG-Master und dem zumindest einen AISG-Slave in einem On/Off-Keying-Verfahren übertragbar. Dieses On/Off-Keying-Signal kann durch einen ersten AISG-Umsetzer erzeugt werden.

Verschiedene Ausführungsbeispiele der Erfindung werden nachfolgend unter Bezugnahme auf die Zeichnungen beispielhaft beschrieben. Gleiche Gegenstände weisen dieselben Bezugszeichen auf. Die entsprechenden Figuren der Zeichnungen zeigen im Einzelnen:
- Figuren 1A, 1B, 1C:: verschiedene Ausführungsbeispiele der erfindungsgemäßen heterogenen Mobilfunkanordnung, wobei über das Speisekabel für die Antennenanordnung auch IP-Daten übertragen werden;
- Figur 2:: ein weiteres Ausführungsbeispiel der erfindungsgemäßen heterogenen Mobilfunkanordnung, wobei das IP-Gerät einen IP-Umsetzer beinhaltet;
- Figuren 3, 4:: weitere Ausführungsbeispiele der erfindungsgemäßen heterogenen Mobilfunkanordnung, wobei ein erster IP-Umsetzer einmal als separates Gerät ausgebildet und einmal in die Basisstation integriert ist;
- Figuren 5A, 5B, 5C:: verschiedene Ausführungsbeispiele der erfindungsgemäßen heterogenen Mobilfunkanordnung, wobei ausschließlich IP-Geräte und keine AISG-Slaves verwendet werden;
- Figuren 6, 7:: je ein Ausführungsbeispiel eines ersten und eines zweiten IP-Umsetzers;

- Figuren 8A, 8B:: verschiedene Ausführungsbeispiele einer IP-Weiche;
- Figuren 9, 10, 11A, 11B, 12:: verschiedene Ausführungsbeispiele, die ein IP-Gerät zeigen, in welches ein zweiter IP-Umsetzer integriert ist;
- Figur 13:: ein Diagramm, welches die Frequenz und die Signalstärke eines AISG-Signals beschreibt; und
- Figuren 14A, 14B, 14C:: verschiedene Blockschaltbilder einer Mobilfunkanordnung, die die Steuerung durch ein AISG-Signal genauer erläutern.

Die nachfolgenden Figuren zeigen Blockschaltbilder von verschiedenen Ausführungsbeispielen der erfindungsgemäßen heterogenen Mobilfunkanordnung 1 zur Versorgung zumindest einer Mobilfunkzelle mit Mobilfunkdienstleistungen. Blöcke innerhalb einer Figur, welche einen doppelten Rand haben, verarbeiten IP-Daten bzw. IP-Datenpakete, wohingegen Blöcke, die lediglich einen einfachen Rand haben, zur Verarbeitung von AISG-Daten bzw. Mobilfunkdaten, also Mobilfunksignalen, dienen. In späteren Figuren werden auch erfindungsgemäße Ausführungsbeispiele beschrieben, bei denen Blöcke, mit einem doppelten Rand, auch AISG-Daten verarbeiten. Dies wird allerdings in dem jeweiligen Zusammenhang gesondert betont.

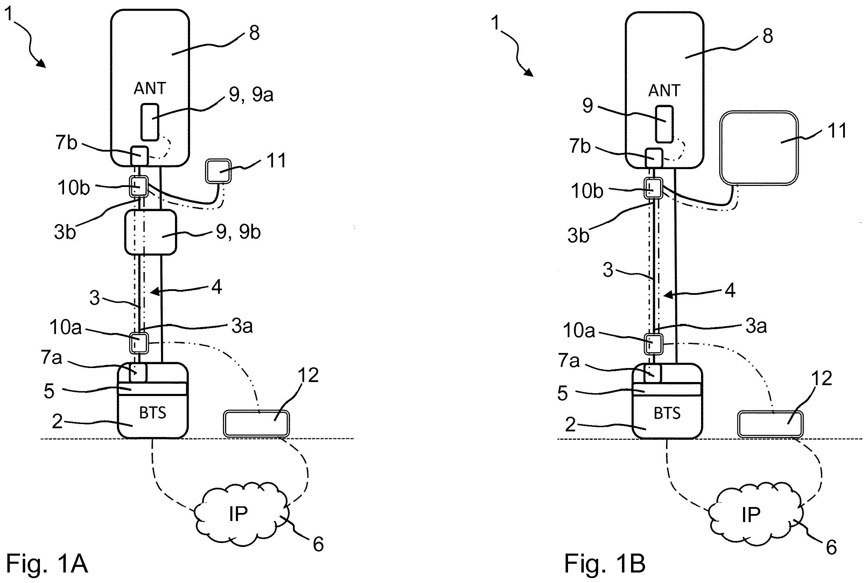

In Figur 1A ist ein erstes Ausführungsbeispiel der erfindungsgemäßen heterogenen Mobilfunkanordnung 1 zur Versorgung zumindest einer Mobilfunkzelle gezeigt. Diese Mobilfunkanordnung 1 umfasst zumindest eine Basisstation 2 (BTS), die dazu ausgebildet ist, Mobilfunksignale zu erzeugen, die über zumindest eine Antennenanordnung 8 ausgesendet werden. Die Basisstation 2 ist außerdem dazu ausgebildet, empfangene Mobilfunksignale zu verarbeiten und auszuwerten. Diese Basisstation 2 ist mittelbar oder unmittelbar über zumindest ein geschirmtes Speisekabel 3 mit der zumindest einen Antennenanordnung 8 verbunden. Die zumindest eine Antennenanordnung 8 umfasst eine Vielzahl von Strahlerelementen, die in einem Antennengehäuse angeordnet sind. Die Antennenanordnung 8 ist dabei dazu ausgebildet, um vorzugsweise in zwei linearen, zirkularen oder elliptischen Polarisationen zu senden und/oder zu empfangen.

Die zumindest eine Antennenanordnung 8 ist dabei beispielsweise auf einem Antennenmast 4 oder einem Antennenhalter angeordnet. Der Antennenmast 4 umfasst ein erstes und ein gegenüberliegendes zweites Ende, wobei das erste Ende an einer Gebäudestruktur und/oder einem Fundament befestigt ist, wobei die zumindest eine Antenennanordnung 8 vorzugsweise näher an dem zweiten Ende angeordnet ist als an dem ersten Ende. Ein Antennenmast 4 muss natürlich nicht zwangsläufig vorhanden sein. Dieser Wortlaut verdeutlicht nur, dass die Antennenanordnung 8 von der Basisstation 2 räumlich beabstandet ist.

Das zumindest eine geschirmte Speisekabel 3 umfasst ein erstes und ein gegenüberliegendes zweites Ende 3a, 3b. Das zumindest eine Speisekabel 3 erstreckt sich vorzugsweise zumindest über eine Teillänge des Antennenmasts 4 oder des Antennenhalters und ist weiter vorzugsweise dazu ausgebildet, die zumindest eine Antennenanordnung 8 mit elektrischer Energie zu versorgen. In dem Ausführungsbeispiel gemäß Figur 1A werden über das zumindest eine geschirmte Speisekabel 3 noch ein AISG-Signal und Mobilfunksingale übertragen.

Es können auch mehrere Speisekabel 3 vorgesehen sein, die über elektronische Komponenten in Reihe miteinander verbunden sind. Es können auch mehrere geschirmte Speisekabel 3 vorgesehen sein, die allesamt parallel nach oben verlaufen und z.B. zur Übertragung von unterschiedlichen Polarisationen eines Mobilfunkbands dienen. Insbesondere kann ein Ende 3a, 3b des zumindest einen Speisekabels 3 auch an einen nicht dargestellten Combiner angeschlossen sein.

In Figur 1A ist ebenfalls der Einsatz eines AISG-Masters 5 vorgesehen. Dieser ist in diesem Ausführungsbeispiel in die Basisstation 2 integriert. Dies kann z.B. über eine Softwarelösung erfolgen. Grundsätzlich könnte der AISG-Master 5 auch als separate Hardware, also als separates Gerät neben der Basisstation 2 ausgebildet sein.

Weiterhin sind in dem Ausführungsbeispiel noch zwei AISG-Slaves 9, 9a, 9b vorgesehen. Ein erster AISG-Slave 9, 9a ist in der zumindest einen Antennenanordnung 8 integriert. Bei diesem handelt es sich in diesem Fall um eine AISG-RET-Einheit. Über diesen ersten AISG-Slave 9, 9a kann der Down-Tilt-winkel eingestellt werden. Damit kann die Zellausleuchtung verändert werden. Der zweite AISG-Slave 9, 9b ist an dem Antennenmast 4 bzw. dem Antennenhalter angeordnet. Bei diesem AISG-Slave 9, 9b handelt es sich um einen AISG-TMA (engl. Tower Mounted Amplifier). Dieser kann beispielsweise von dem AISG-Master 5 aus- bzw. eingeschaltet werden. AISG-Daten sind dabei auf dem zumindest einen geschirmten Speisekabel 3 zwischen dem AISG-Master 5 und den entsprechenden AISG-Slaves 9, 9a, 9b in einem On/Off-Keying-Verfahren übertragbar. Diese AISG-Daten sind in den Figuren mit einem Punkt und einem Strich gekennzeichnet.

In Figur 1A ist außerdem noch einer erster AISG-Umsetzer 7a vorgesehen, der über einem ersten Signalleitungsanschluss mit dem AISG-Master 5 verbunden ist und der über einen zweiten Signalleitungsanschluss mittelbar mit dem ersten Ende 3a des zumindest einen geschirmten Speisekabels 3 verbunden ist. Der erste AISG-Umsetzer 7a ist dazu ausgebildet, eine Layer-1-Konvertierung zwischen beiden Signalleitungsanschlüssen durchzuführen und AISG-Daten in einem On/Off-Keying-Verfahren über das zumindest eine geschirmte Speisekabel 3 zu übertragen. Dabei werden die AISG-Daten beispielsweise über einen RS-485-Bus von dem AISG-Master 5 über den ersten Signalleitungsanschluss an den ersten AISG-Umsetzer 7a übertragen. Dieser wandelt die AISG-Daten um und überträgt sie in einem On/Off-Keying-Verfahren über das zumindest eine geschirmte Speisekabel 3.

In Figur 1A ist dargestellt, dass der erste AISG-Umsetzer 7a in der Basisstation 2 integriert ist. Grundsätzlich könnte er auch in dem AISG-Master 5 integriert sein. In diesem Fall hätte der integrierte AISG-Umsetzer 7a anstatt zwei Signalleitungsanschlüssen einen Signalleitungsanschluss.

Die Figur 1A beinhaltet daher die Basisstation 2, den AISG-Master 5 und den ersten AISG-Umsetzer 7a. Sowohl der AISG-Master 5 als auch der erste AISG-Umsetzer 7a können in einer Software in der Basisstation 2 realisiert sein.

In Figur 1A ist außerdem noch ein zweiter AISG-Umsetzer 7b dargestellt, der über zumindest (jeweils) einen ersten Signalleitungsanschluss mit dem ersten AISG-Slave 9, 9a und dem zweiten AISG-Slave 9, 9b verbunden ist. Über einen zweiten Signalleitungsanschluss ist er wiederum mittelbar mit dem zweiten Ende 3b des zumindest einen geschirmten Speisekabels 3 verbunden. Unter einer "Verbindung" wird eine elektrische Verbindung verstanden.

Der zweite AISG-Umsetzer 7b ist wiederum dazu ausgebildet, eine Layer-1-Konvertierung zwischen beiden Signalleitungsanschlüssen durchzuführen und AISG-Daten in einem On/Off-Keying-Verfahren über das zumindest eine geschirmte Speisekabel 3 zu übertragen. Dabei überträgt der zweite AISG-Umsetzer 7b AISG-Daten zu dem ersten AISG-Umsetzer 7a und umgekehrt.

In dem Ausführungsbeispiel aus Figur 1A ist der zweite AISG-Umsetzer 7b in oder an der zumindest einen Antennenanordnung 8 angeordnet. Er könnte auch in dem zumindest einem AISG-Slave 9, 9a, 9b integriert sein oder allgemein an dem Antennenhalter angeordnet sein.

Grundsätzlich gilt, dass der zweite AISG-Umsetzer 7b zwischen dem zweiten Ende 3b des zumindest einen geschirmten Speisekabels 3 und der zumindest einen Antennenanordnung 8 angeordnet ist.

Sowohl der erste AISG-Umsetzer 7a als auch der zweite AISG-Umsetzer 7b sind dazu ausgebildet, Mobilfunksignale zwischen ihren beiden Signalleitungsanschlüssen hindurch zu schleifen. Der erste AISG-Umsetzer 7a schleift daher Mobilfunksignale von der Basisstation 2 in Richtung des zumindest einen ersten Endes 3a des Speisekabels 3 hindurch. Der zweite AISG-Umsetzer 7b schleift Mobilfunksingale von dem zweiten Ende 3b des zumindest einen Speisekalbes 3 zur zumindest einen Antennenanordnung 8 hindurch. Selbiges gilt für die umgekehrte Richtung.

Der zweite AISG-Umsetzer 7b führt wiederum ein On/Off-Keying-Verfahren durch und gibt die AISG-Daten beispielsweise über einen RS-485-Bus an den ersten und den zweiten AISG-Slave 9, 9a, 9b weiter.

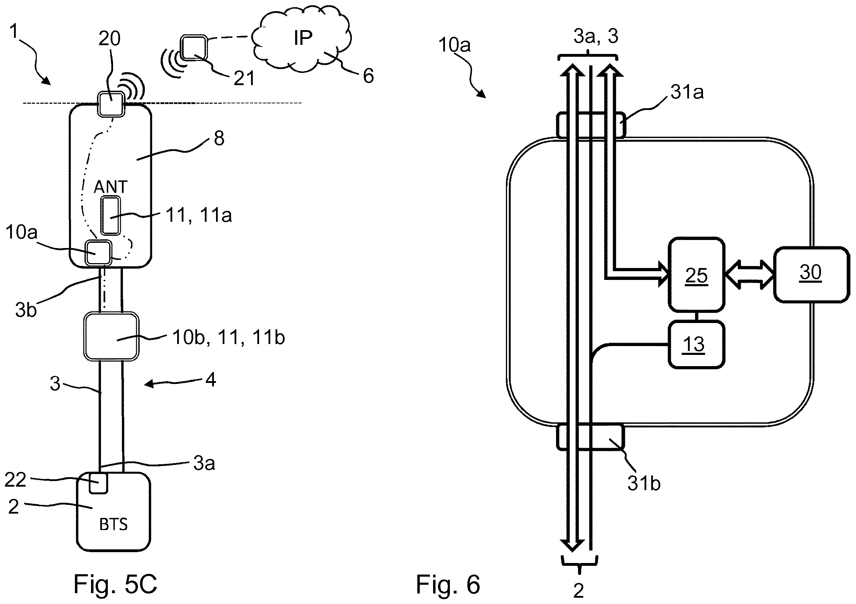

Die erfindungsgemäße heterogene Mobilfunkanordnung 1 umfasst außerdem noch zumindest einen ersten IP-Umsetzer 10a und zumindest einen zweite IP-Umsetzer 10b. Weiterhin ist noch zumindest ein erstes IP-Gerät 11 vorgesehen. Beide IP-Umsetzer 10a, 10b umfassen jeweils einen IP-Anschluss 30 (siehe z.B. Figur 6) und jeweils zumindest einen Signalleitungsanschluss 31a. Der erste IP-Umsetzer 10a ist mit seinem IP-Anschluss 30 mit dem übergeordneten IP-Netzwerk 6 verbindbar oder verbunden (elektrisch z.B. über Kabel, optisch z.B. über Lichtwellenleiter oder über Funk), wohingegen der zweite IP-Umsetzer 10b mit seinem IP-Anschluss 30 mit dem zumindest einen ersten IP-Gerät 11 verbunden ist.

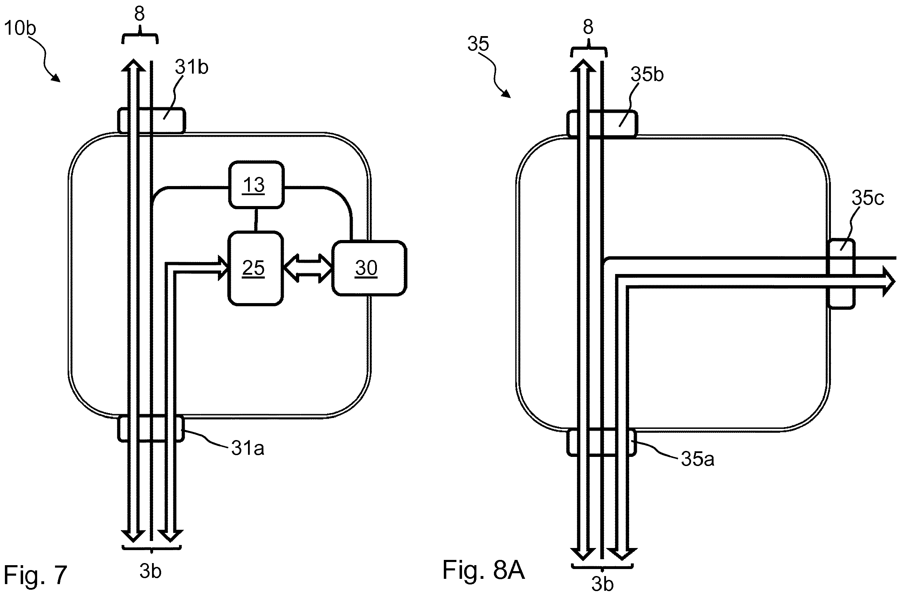

Der zumindest eine Signalleitungsanschluss 31a des ersten IP-Umsetzers 10a (siehe Figur 6) und der zumindest eine Signalleitungsanschluss 31a des zweiten IP-Umsetzers 10b (siehe Figur 7) sind in diesem Ausführungsbeispiel unmittelbar mit dem zumindest einen geschirmten Speisekabel 3 elektrisch verbunden. Dies gilt auch dann, wenn der AISG-Slave 9, 9b, bei welchem es sich in diesem Fall um den AISG-TMA (engl. Tower Mounted Amplifier) handelt, in dem Speisekabel 3 angeordnet ist und dieses sozusagen unterbricht (also in zwei Teile aufteilt). Im Rahmen der Erfindung erstreckt sich das Speisekabel 3 von der Basisstation 2 bis zu der Antennenanordnung 8, wobei dieses Speisekabel 3 auch (mehrfach) unterbrochen sein kann.

In dem Ausführungsbeispiel aus Figur 1A umfasst der zumindest eine erste IP-Umsetzer 10a noch einen weiteren Signalleitungsanschluss 31b. Dieser weitere Signalleitungsanschluss 31b ist unmittelbar mit der Basisstation 2 verbunden, wohingegen der zumindest eine Signalleitungsanschluss 31a mit dem ersten Ende 3a des Speisekabels 3 verbunden ist. Der zweite IP-Umsetzer 10b umfasst außerdem noch einen weiteren Signalleitungsanschluss 31b. Dieser weitere Signalleitungsanschluss 31b ist unmittelbar mit der Antennenanordnung 8 verbunden, wohingegen der zumindest eine Signalleitungsanschluss 31a unmittelbar mit dem zweiten Ende 3b des zumindest einen Speisekabels 3 verbunden ist. Diese Signalleitungsanschlüsse 31a, 31b sind in den Figuren 6, 7 und 10 bis 12 genauer dargestellt. Dabei zeigt Figur 6 den ersten IP-Umsetzer 10a und die Figuren 7 und 10 bis 12 den zweiten IP-Umsetzer 10b.

In dem Ausführungsbeispiel aus der Figur 1A umfassen die beiden IP-Umsetzer 10a, 10b drei Anschlüsse 30, 31a, 31b. Der erste IP-Umsetzer 10a ist über einen Router bzw. Switch 12 mit dem übergeordneten IP-Netzwerk 6 verbunden.

Der erste IP-Umsetzer 10a ist dazu ausgebildet, eine Layer-1-Konvertierung zwischen seinem IP-Anschluss 30 und seinem zumindest einen Signalleitungsanschluss 31a, welcher mit dem Speisekabel 3 verbunden ist, durchzuführen. Der zweite IP-Umsetzer 10b ist ebenfalls dazu ausgebildet, eine Layer-1-Konvertierung zwischen seinem IP-Anschluss 30 und seinem zumindest einen Signalleitungsanschluss 31a, welcher mit dem zumindest einen Speisekabel 3 verbunden ist, durchzuführen. Die beiden IP-Umsetzer 10a, 10b, können über das Speisekabel 3 und über ihre jeweiligen zumindest einen Signalleitungsanschlüsse 31a IP-Daten übertragen. Dadurch ist das zumindest eine IP-Gerät 11 an das übergeordnete IP-Netzwerk 6 anschließbar.

Bei der Layer-1-Konvertierung handelt es sich insbesondere um die Umsetzung eines Ethernet-Protokolls in ein Narrow-Band-IOT-Protokoll.

Die beiden IP-Umsetzer 10a, 10b sind insbesondere dazu ausgebildet, IP-Daten in einem IP4-Protokoll und/oder in einem IP6-Protokoll an ihren IP-Anschlüssen 30 zu verarbeiten und in ein entsprechendes Narrow-Band-IOT-Protokoll umzusetzen.

Die IP-Umsetzer 10a, 10b können auch als IP-SBT (engl. Smart Bias Tee) bezeichnet werden. Die IP-Daten werden durch die IP-Umsetzer 10a, 10b an ihrem zumindest einen Signalleitungsanschluss 31a auf eine entsprechende Gleichspannung in dem geschirmten Speisekabel 3 aufmoduliert.

Der erste und der zweite IP-Umsetzer 10a, 10b sind dazu ausgebildet, untereinander IP-Daten über das zumindest eine geschirmte Speisekabel 3 auszutauschen. Diese IP-Daten werden dabei mit einer Frequenz von weniger als 20 MHz, 15 MHz, 10 MHz, 5 MHz, 1 MHz, 750 kHz oder 500 kHz übertragen. Als digitale Modulation ist bevorzugt eine 8PSK-Modulation vorgesehen. Es ist auch möglich, dass eine digitale Modulationen höherer Ordnung, insbesondere eine QAM verwendet werden. Die zumindest beiden IP-Umsetzer 10a, 10b sind dazu ausgebildet, die Modulation durch die sie die IP-Daten auf dem geschirmten Speisekabel 3 übertragen, im Betrieb zu wechseln. So kann die verwendete Modulation auch von dem angeschlossenen IP-Gerät und dessen benötigter Bandbreite abhängen.

Der erste und zweite IP-Umsetzer 10a, 10b sind außerdem dazu ausgebildet, die IP-Daten mit einem Signalpegel untereinander über das zumindest eine geschirmte Speisekabel 3 auszutauschen, der niedriger ist, als der Signalpegel eines AISG-Signals, das ebenfalls über dasselbe zumindest eine geschirmte Speisekabel 3 übertragbar ist. Insbesondere ist der Signalpegel bevorzugt niedriger als -40 dBm, welcher wiederum dem Off-Pegel eines On/Off-Keying-Signals entspricht. Dadurch ist sichergestellt, dass bei Übertragung der zusätzlichen IP-Daten keine Fehler bei der Übertragung des AISG-Signals auftreten.

Bei dem IP-Gerät 11 handelt es sich beispielsweise um:
a) zumindest einen Temperatursensor; und/oder
b) zumindest einen Helligkeitssensor; und/oder
c) zumindest einen GNSS-Sensor; und/oder
d) zumindest einen Regensensor; und/oder
e) zumindest einen Windsensor; und/oder
f) zumindest einen Luftverschmutzungssensor; und/oder
g) zumindest einen Luftdrucksensor; und/oder
h) zumindest einen Luftfeuchtigkeitssensor; und/oder
i) zumindest einen Mikrocontroller; und/oder
j) zumindest eine Webcam; und/oder
k) zumindest eine RET-Einheit; und/oder
l) zumindest einen Tower-Mounted-Amplifier; und/oder
m) zumindest einen 5G-Repeater.

Um die zumindest eine Antennenanordnung 8 mit elektrischer Energie versorgen zu können, umfasst die erfindungsgemäße heterogene Mobilfunkanordnung 1 noch zumindest eine Energieversorgungseinrichtung 22 (siehe Figur 5C). Diese ist dazu ausgebildet, eine entsprechende Versorgungspannung (z.B. Gleichspannung) zu erzeugen. Die Energieversorgungseinrichtung 22 ist vorzugsweise in der Basisstation 2 integriert. Dadurch ist die Energieversorgungseinrichtung 22 ebenfalls unmittelbar oder wie in Figur 1A gezeigt mittelbar über den zumindest einen ersten IP-Umsetzer 10a mit dem ersten Ende 3a des zumindest einen geschirmten Speisekabels 3 verbunden. Weil das zweite Ende 3b des zumindest einen geschirmten Speisekabels 3 wiederum mittelbar über den zumindest einen zweiten IP-Umsetzer 10b mit der zumindest einen Antennenanordnung 8 verbunden ist kann diese hierüber mit elektrischer Energie versorgt werden. Der erste und der zweite IP-Umsetzer 10a, 10b sind bezüglich der Versorgungsspannung und des AISG-Signals sowie bezüglich der Mobilfunksignale völlig transparent. Obwohl die IP-Umsetzer 10a, 10b in Reihe mit dem geschirmten Speisekabel 3 und der Basisstation 2 bzw. in Reihe mit dem geschirmten Speisekabel 3 und der zumindest einen Antennenanordnung 8 geschaltet sind, leiten sie die Versorgungsspannung, das AISG-Signal und entsprechende Mobilfunksingale durch.

In Figur 1B ist ein weiteres Ausführungsbeispiel der erfindungsgemäßen Mobilfunkanordnung 1 gezeigt. Bei dem IP-Gerät 11 handelt es sich um einen 5G-Repeater. Dieser kann beispielswiese im Front- oder Backhauling im Millimeterbereich eingesetzt werden. Der 5G-Repeater, also das IP-Gerät 11 ist dabei mit dem zweiten IP-Umsetzer 10b verbunden. Dieser zweite IP-Umsetzer 10b umfasst eine (Energie-) Versorgungseinrichtung 13 (s. Figur 6, Figur 7) über die das IP-Gerät 11 mit elektrischer Energie versorgt werden kann. Der zweite IP-Umsetzer 10b ist daher dazu ausgebildet, aus dem zumindest einen geschirmten Speisekabel 3 eine Versorgungsspannung zu entnehmen und dem IP-Gerät 11 insbesondere über einen Power-Over-Ethernet-Standard an seinem IP-Anschluss 30 zur Verfügung zu stellen. Dadurch kann auf eine besonders einfache Art und Weise sowohl eine Datenverbindung als auch eine Energieversorgung erreicht werden.

Über die IP-Daten kann der 5G-Repeater insbesondere bezüglich der Zellausleuchtung angesteuert werden, so dass er diese ändert, oder auch Statusmeldungen über das IP-Netzwerk 6 zur Verfügung stellen.

In Figur 1B ist außerdem dargestellt, dass es lediglich einen AISG-Slave 9 gibt. In diesem Fall ist zu erkennen, dass sich das zumindest eine geschirmte Speisekabel 3 lediglich zwischen den IP-Umsetzern 10a, 10b erstreckt. Die IP-Umsetzer 10a, 10b sind daher (elektrisch) näher an dem zumindest einen Speisekabel 3 angeordnet, als der erste und der zweite AISG-Umsetzer 7a, 7b.

Der 5G-Repeater 11 kann an demjenigen Antennenmast 4 bzw. dem Antennenhalter angeordnet sein, an dem auch die zumindest eine Antennenanordnung 8 angebracht ist.

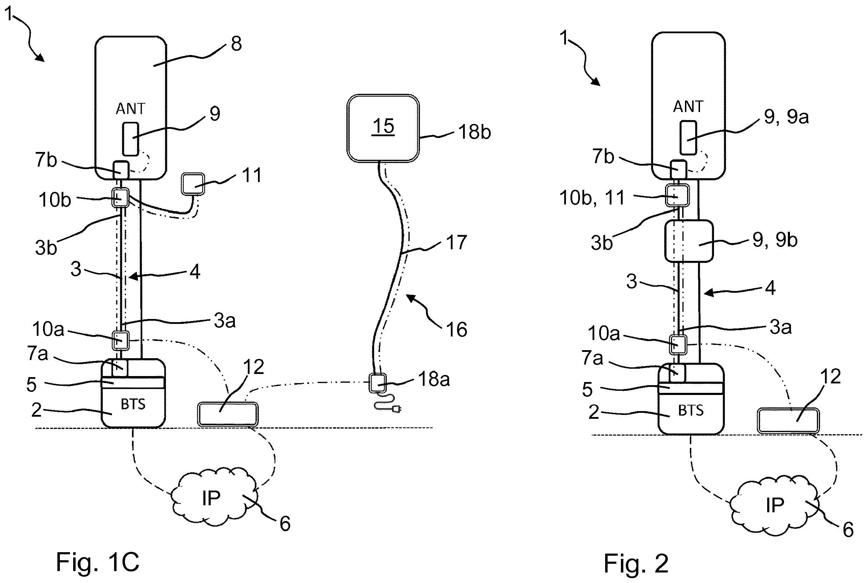

In Figur 1C ist ein weiteres Ausführungsbeispiel der erfindungsgemäßen Mobilfunkanordnung 1 dargestellt. Ein weiterer 5G-Repeater 15 ist vorgesehen und an einem andern Antennenmast 16 oder Antennenhalter angeordnet. Der weitere 5G-Repeater 15 ist über ein weiteres Speisekabel 17 mit elektrischer Energie versorgbar. Es ist weiterhin ein erster weiterer IP-Umsetzer 18a vorgesehen, der mit seinem IP-Anschluss mit einem weiteren übergeordneten IP-Netzwerk oder dem einen übergeordneten IP-Netzwerk 6 verbunden ist. Ein zweiter weiterer IP-Umsetzer 18b ist in dem weiteren 5G-Repeater 15 integriert oder an diesem angeordnet. Die beiden weiteren IP-Umsetzer 18a, 18b sind dazu ausgebildet, über ihre jeweiligen Signalleitungsanschlüsse IP-Daten über das weitere Speisekabel 17 auszutauschen, wodurch der 5G-Repeater 15 mit dem übergeordneten IP-Netzwerk 6 oder einem weiteren IP-Netzwerk verbunden oder verbindbar ist. Über das weitere Speisekabel 17 findet auch die Energieversorgung des weiteren 5G-Repeaters 15 statt.

Besonders bevorzugt ist an dem Antennenmast 4 oder Antennenhalter, an dem die zumindest eine Antennenanordnung 8 angeordnet ist, außerdem eine Speiseantenne vorgesehen. Diese kann auf den weiteren 5G-Repeater 15 gerichtet sein und diesen auf diese Art und Weise speisen. Dieser weitere 5G-Repeater 15 ist daher beabstandet von der zumindest einen Antennenanordnung 8 an insbesondere einem separaten Antennenmast 16 angeordnet. Der weitere 5G-Repeater 15 verteilt dann das Signal der Speiseantenne entsprechend weiter, wodurch eine Versorgung der umliegenden Gebiete mit einer hohen Datenrate sichergestellt ist.

Grundsätzlich ist in den Zeichnungen eine Verbindung, über die IP-Daten übertragen werden, durch einen Strich mit zwei Punkten dargestellt, wohingegen eine Verbindung, über die AISG-Daten übertragen werden, durch einen Strich mit nur einem Punkt dargestellt ist.

In Figur 2 ist ein weiteres erfindungsgemäßes Ausführungsbeispiel der Mobilfunkanordnung 1 dargestellt. Der zweite IP-Umsetzer 10b ist dabei direkt in das zumindest eine IP-Gerät 11 integriert. Es könnte auch umgekehrt sein, dass das zumindest eine IP-Gerät 11 in den zweiten IP-Umsetzer 10b integriert ist.

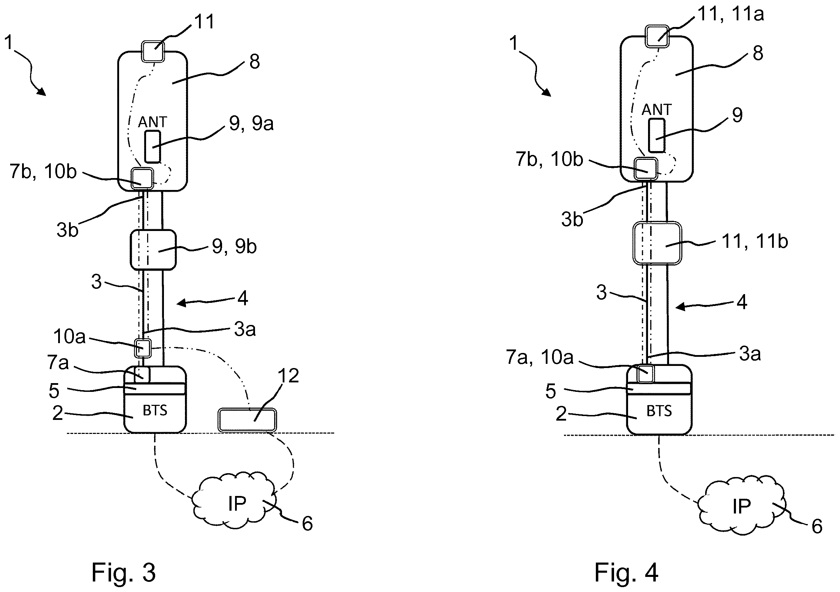

In Figur 3 ist ein weiteres erfindungsgemäßes Ausführungsbeispiel der Mobilfunkanordnung 1 dargestellt. Das IP-Gerät 11 ist in diesem Fall an der Oberseite der zumindest einen Antennenanordnung 8 bzw. am zweiten Ende des Antennenmasts 4 angeordnet. Bei dem IP-Gerät 11 kann es sich grundsätzlich um einen oder mehrere Sensorcluster handeln, welche z.B. die Luftqualität in Verbindung mit der Sonneneinstrahlung ermitteln und diese Messdaten als IP-Daten übermitteln. Grundsätzlich kann auch ein GNSS-Sensor, insbesondere in Form eines GPS-Sensors, angebracht sein.

Weiterhin ist dargestellt, dass der zweite AISG-Umsetzer 7b und der zweite IP-Umsetzer 10b in einem gemeinsamen Gerät integriert sind.

Dieses gemeinsame Gerät umfasst neben einem IP-Anschluss 30 zum Anschluss an das IP-Gerät 11 noch einen AISG-Anschluss zum Anschluss an den zumindest einen AISG-Slave 9, 9a, 9b. Die Energieversorgung des AISG-Slaves 9, 9a, 9b kann genauso wie die Energieversorgung des IP-Geräts 11 über dieses gemeinsame Gerät erfolgen.

In Figur 4 ist ein weiteres erfindungsgemäßes Ausführungsbeispiel der Mobilfunkanordnung 1 dargestellt. In diesem Fall sind auch der erste IP-Umsetzer 10a und der erste AISG-Umsetzer 7a in einem gemeinsamen Gerät integriert. Dieses gemeinsame Gerät ist dabei vorzugsweise auch noch in der Basisstation 2 integriert. Der Anschluss an das übergeordnete IP-Netzwerk 6 erfolgt über die Basisstation 2, die ebenfalls an das übergeordnete IP-Netzwerk 6 angeschlossen ist.

Der zweite AISG-Slave 9, 9b aus Figur 3, bei welchem es sich um ein AISG-TMA handelt, wurde durch ein weiteres IP-Gerät 11, 11b ersetzt. In diesem Fall wird nicht mehr von einem AISG-TMA, sondern von einem IP-TMA gesprochen, welcher weitere Funktionen beinhalten kann, die nicht zwingend im Zusammenhang mit dem Betrieb eines Mobilfunknetzes stehen. So kann dieser auch über ein Sensorcluster verfügen. In diesem Fall ist lediglich die AISG-RET-Einheit 9, 9a das einzige AISG-Gerät. Alle anderen Antenna-Line-Devices kommunizieren mittels eines IP-Protokolls über die IP-Umsetzer 10a, 10b.

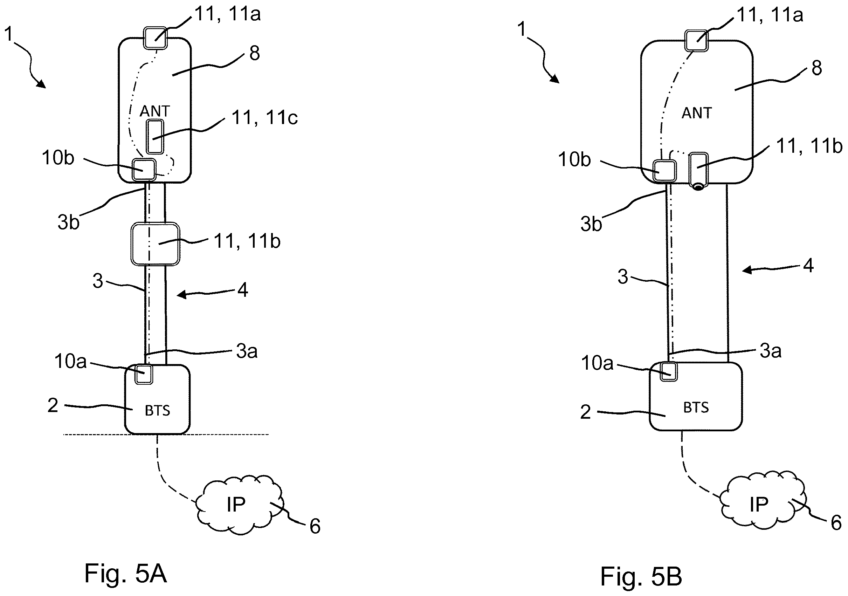

In Figur 5A ist ein weiteres erfindungsgemäßes Ausführungsbeispiel der Mobilfunkanordnung 1 gezeigt. In diesem Fall ist das gesamte AISG-Protokoll weggefallen. Es gibt weder einen AISG-Master 5, noch einen ersten oder zweiten AISG-Umsetzer 7a, 7b. Auch ein entsprechender AISG-Slave 9 ist nicht mehr vorhanden. Stattdessen wird eine IP-RET-Einheit 11c als weiteres IP-Gerät 11 eingesetzt, die über den ersten und den zweiten IP-Umsetzer 10a, 10b angesteuert wird. Weiterhin ist der IP-TMA 11b als weiteres IP-Gerät 11 vorgesehen. Einen zusätzlichen Sensor 11a gibt es ebenfalls noch.

Die heterogene Mobilfunkanordnung 1 kann in diesem Fall auch als IP-Antenna-Line-Netzwerk (iPAN) bezeichnet werden. Alle Netzwerkkomponenten sind über die IP-Umsetzer 10a, 10b angebunden (All-IP).

In Figur 5B ist ein weiteres Ausführungsbeispiel der erfindungsgemäßen Mobilfunkanordnung 1 dargestellt. Bei dem IP-Gerät 11, 11b handelt es sich insbesondere um eine Kamera 11b, wie beispielweise eine Webcam zur Standortaufnahme. Diese kann beispielsweise den Antennenmasten 4 zusammen mit der Basisstation 2 abbilden. Bei dem anderen IP-Gerät 11, 11a handelt es sich z.B. um einen GNSS-Sensor 11a, der auf der Oberseite der zumindest einen Antennenanordnung 8 angeordnet ist.

Die Figur 5C erläutert ein anderes erfindungsgemäßes Ausführungsbeispiel der Mobilfunkanordnung 1. In diesem Fall ist noch eine IP-Antennenanordnung 20 vorgesehen, die an, in oder auf der zumindest einen Antennenanordnung 8 oder an dem Antennenmast 4 bzw. Antennenhalter angeordnet ist. Der erste IP-Umsetzer 10a ist mit seinem IP-Anschluss 30 mit der IP-Antennenanordnung 20 verbunden und dazu ausgebildet, über die IP-Antennenanordnung 20 eine Verbindung zu dem übergeordneten IP-Netzwerk 6 herzustellen. Dies gelingt über eine Funkverbindung. Der erste IP-Umsetzer 10a ist über seinen zumindest einen Signalleitungsanschluss 31a wiederum mit dem zumindest einen Signalleitungsanschluss 31a des zweiten IP-Umsetzers 10b verbunden, der in dem IP-Gerät 11 integriert ist. Diese Verbindung erfolgt über das zumindest eine geschirmte Speisekabel 3 bzw. über einen Teil des zumindest einen geschirmten Speisekalbes 3. Die Basisstation 2 dient in diesem Fall lediglich zur Erzeugung einer Spannungsversorgung, bei welcher es sich insbesondere um eine Gleichspannung handelt. Grundsätzlich könnten auch noch Mobilfunksingale übertragen werden. Bei der Funkverbindung der IP-Antennenanordnung 20 zu einer entsprechenden Antennenanordnung 21, die mit dem übergeordneten IP-Netzwerk 6 verbunden ist, kann es sich beispielsweise um eine LTE-Verbindung handeln.

Figur 6 zeigt einen beispielhaften Aufbau des ersten IP-Umsetzers 10a. Der erste IP-Umsetzer 10a umfasst ein Netzteil 13 und ein IP-Modem 25. Das Netzteil 13 versorgt dabei das IP-Modem 25 mit elektrischer Energie, wobei das Netzteil 13 diese elektrische Energie aus dem zumindest einen Speisekabel 3 über den weiteren Signalleitungsanschluss 31b bezieht.

Weiterhin sind drei Anschlüsse 30, 31a, 31b vorgesehen. Ein IP-Anschluss 30 dient zum Anschluss an das übergeordnete IP-Netzwerk 6. Ein Signalleitungsanschluss 31a dient zum unmittelbaren bzw. mittelbaren Anschluss an das erste Ende 3a des zumindest einen Speisekabels 3. Ein weiterer Signalleitungsanschluss 31b dient zum mittelbaren oder unmittelbaren Anschluss an die Basisstation 2. Die beiden Signalanschlüsse 31a, 31b sind derart miteinander verbunden, dass zumindest eine Versorgungsspannung, ein AISG-Signal und Mobilfunksignale von dem weiteren Signalleitungsanschluss 31b zum zumindest einen Signalleitungsanschluss 31a hindurch schleifbar sind. Selbiges gilt auch für die entgegengesetzte Richtung.

Das IP-Modem 25 ist dagegen mit dem zumindest einen Signalleitungsanschluss 31a derart verbunden, dass IP-Daten an diesen zumindest einen Signalleitungsanschluss 31a ausgegeben und von diesen empfangen werden können. Das IP-Modem 25 ist insbesondere dazu ausgebildet, diese Daten auf die Gleichspannung zu modulieren, die von dem weiteren Signalleitungsanschluss 31b hin zu dem zumindest einen Signalleitungsanschluss 31a hindurch geschleift wird.

Vorzugsweise umfassen beide IP-Umsetzer 10a, 10b ein wasserdichtes bzw. feuchtigkeitsdichtes Gehäuse. Der IP-Anschluss 30 kann eine elektrische oder eine optische Verbindung zu dem übergeordneten IP-Netzwerk 6 herstellen. Auch eine funkbasierte Verbindung wäre möglich.

Mit einer geschweiften Klammer ist dargestellt, mit welchen Komponenten die Anschlüsse 31a, 31b verbunden sind.

In Figur 7 ist ein Ausführungsbeispiel des zweiten IP-Umsetzers 10b dargestellt. Dieser umfasst ebenfalls eine elektrische Versorgungseinrichtung 13 (Netzteil) und ein IP-Modem 25. Das IP-Modem 25 ist mit dem IP-Anschluss 30 verbunden, so dass das IP-Modem 25 Daten über den IP-Anschluss 30 ausgeben oder von diesem empfangen kann. Die elektrische Versorgungseinrichtung 13 ist dazu ausgebildet, um das IP-Modem 25 mit elektrischer Energie versorgen zu können. Die elektrische Versorgungseinrichtung 13 entnimmt diese Energie aus dem zumindest einen geschirmten Speisekabel 3. Die elektrische Versorgungseinrichtung 13 ist außerdem dazu ausgebildet, elektrische Energie über den IP-Anschluss 30 zur Verfügung zu stellen, so dass dadurch das zumindest eine IP-Gerät 11 betrieben werden kann.

Der zweite IP-Umsetzer 10b umfasst in diesem Ausführungsbeispiel ebenfalls drei Anschlüsse 30, 31a, 31b. Neben dem IP-Anschluss 30 gibt es noch den zumindest einen Signalleitungsanschluss 31a und einen weiteren Signalleitungsanschluss 31b. Der zumindest eine Signalleitungsanschluss 31a ist mittelbar oder unmittelbar mit dem zweiten Ende 3b des zumindest einen geschirmten Speisekabels 3 verbindbar oder verbunden. Der weitere Signalleitungsanschluss 31b ist mittelbar oder unmittelbar mit der zumindest einen Antennenanordnung 8 verbunden. Bei einer unmittelbaren Verbindung ist dieser direkt an der zumindest einen Antennenanordnung 8 angeschlossen. Bei einer mittelbaren Verbindung können noch andere elektrische Komponenten, wie z.B. Combiner oder der AISG-Umsetzer 7b dazwischen angeordnet sein.

Der zweite IP-Umsetzer 10b ist dazu ausgebildet, um eine elektrische Versorgungsspannung, AISG-Signale und/oder Mobilfunksignale von dem zumindest einen Signalleitungsanschluss 31a zum weiteren Signalleitungsanschluss 31b hindurch zu schleifen (selbiges gilt für die umgekehrte Richtung). Das IP-Modem 25 ist dazu ausgebildet, die IP-Daten an den zumindest einen Signalleitungsanschluss 31a auszugeben und IP-Daten von dem zumindest einen Signalleitungsanschluss 31a zu empfangen. Auch hier werden die IP-Daten vorzugsweise auf die elektrische Versorgungsspannung (Gleichspannung) aufmoduliert, die über das zumindest einen geschirmte Speisekabel 3 übertragen wird.

In Figur 8A ist eine IP-Weiche 35 dargestellt. Diese umfasst zumindest 3 Signalleitungsanschlüsse 35a, 35b, 35c. Die IP-Daten können zumindest von einem Signalleitungsanschluss 35a zu einem anderen Signalleitungsanschluss 35c hindurch geschleift werden. Die AISG-Daten werden stattdessen von dem ersten Signalleitungsanschluss 35a lediglich zum zweiten Signalleitungsanschluss 35b übertragen, nicht jedoch zum dritten Signalleitungsanschluss 35c. Dagegen werden die IP-Daten lediglich vom ersten Signalleitungsanschluss 35a zum dritten Signalleitungsanschluss 35c, nicht jedoch zum zweiten Signalleitungsanschluss 35b übertragen. Die elektrische Versorgungsspannung wird dagegen zwischen allen drei Signalleitungsanschlüssen 35a, 35b, 35c übertragen. Die Mobilfunksignale werden bevorzugt ebenfalls lediglich zwischen dem ersten Signalleitungsanschluss 35a und dem zweiten Signalleitungsanschluss 35b übertragen. Eine IP-Weiche 35 führt keine Layer-1-Konvertierung durch. Die IP-Weiche 35 kann auch als IP-BT (IP Bias Tee) bezeichnet werden. Eine solche IP-Weiche 35 kann entsprechende Filter aufweisen, wodurch sichergestellt ist, dass nur bestimmte Signalanteile an bestimmten Signalleitungsanschlüssen 35a, 35b, 35c ausgegeben werden.

Bei Einsatz einer solchen IP-Weiche 35 zwischen der Basisstation 2 und dem ersten Ende 3a des zumindest einen geschirmten Speisekabels 3 bzw. zwischen dem zweiten Ende 3b des geschirmten Speisekabels 3 und der zumindest einen Antennenanordnung 8 kann ein entsprechender IP-Umsetzer 10a, 10b weniger als drei Anschlüsse 30, 31a, 31b aufweisen. So kann der erste IP-Umsetzer 10a, welcher zur Herstellung einer Verbindung mit einem übergeordneten IP-Netzwerk 6 dient, lediglich zwei Anschlüsse 30, 31a umfassen, wohingegen der zweite IP-Umsetzer 10b, welcher zum Anschluss an ein IP-Gerät 11 dient, gemäß der Zeichnungsfigur 9 auch nur mit einem Signalleitungsanschluss 31a auskommen kann.

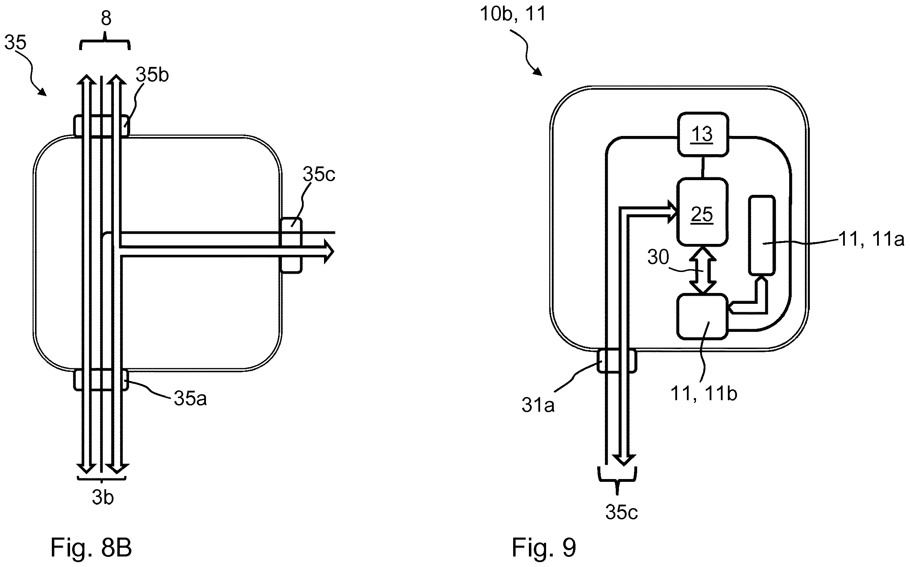

In Figur 8B ist ein anderes Ausführungsbeispiel der IP-Weiche 35 dargestellt. In diesem Fall werden die IP-Daten zwischen allen Anschlüssen 35a, 35b, 35c ausgetauscht. Selbiges gilt auch für die elektrische Versorgungsspannung. Lediglich das AISG-Signal und/oder das Mobilfunksignal werden nur zwischen zwei Anschlüssen 35a und 35b hindurch geschleift. Das AISG-Signal bzw. die Mobilfunkdaten stehen an dem dritten Signalleitungsanschluss 35c nicht zur Verfügung. Diese selektive Auswahl kann wiederum über entsprechende Filter erfolgen.

In Figur 9 ist ein weiteres Ausführungsbeispiel dargestellt, welches zeigt, dass der zweite IP-Umsetzer 10b und das zumindest eine IP-Gerät 11 in einem gemeinsamen Gerät bzw. Gehäuse untergebracht sind. Dieses Gerät umfasst lediglich einen von außen zugänglichen Signalleitungsanschluss 31a, über den zumindest die elektrische Versorgungsspannung und IP-Daten zuführbar sind. Dieses gemeinsame Gerät umfasst wiederum eine elektrische Versorgungseinrichtung 13 und ein IP-Modem 25. Weiterhin ist ein IP-Gerät 11 in Form eines Mikrocontrollers 11b vorgesehen, der dazu ausgebildet ist, mit dem IP-Modem 25 und einem Sensor bzw. Sensorcluster 11a Daten auszutauschen. Sowohl der Mikrocontroller 11b als auch der zumindest eine Sensor 11a können gemeinsam als IP-Gerät 11 betrachtet werden. Der zweite IP-Anschluss 30 ist zwischen dem IP-Modem 25 und dem Mikrocontroller 11b dargestellt. Die elektrische Versorgungseinrichtung 13 dient außerdem dazu, zumindest den Mikrocontroller 11b und/oder den zumindest einen Sensor 11a mit elektrischer Energie zu versorgen. Dies kann ebenfalls über Power-Over-Ethernet oder eine andere Schnittstelle erfolgen. Dieses gemeinsame Gerät, welches lediglich über einen Signalleitungsanschluss 31a verfügt, kann auch als Endknoten in einem IP-Netzwerk bezeichnet werden. Es verfügt daher über keine nach außen hin weiterführenden Anschlüsse. Es wird insbesondere an eine entsprechende IP-Weiche 35 angeschlossen.

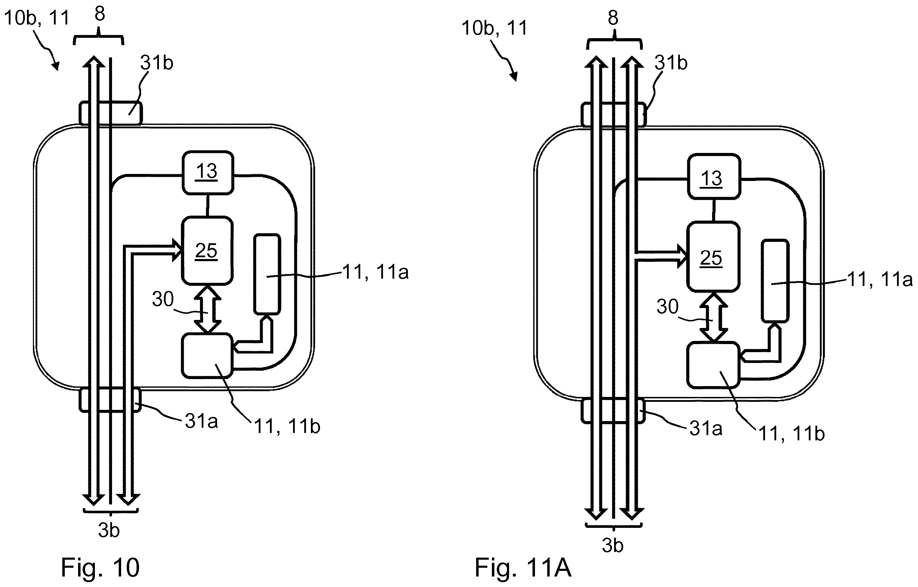

Anders sieht es bei dem Ausführungsbeispiel gemäß Figur 10 aus. Auch hier ist der zumindest eine zweite IP-Umsetzer 10b zusammen mit dem IP-Gerät 11 in einem gemeinsamen Gerät integriert. Dieses gemeinsame Gerät verfügt allerdings neben dem zumindest einen Signalleitungsanschluss 31a noch über einen weiteren Signalleitungsanschluss 31b. Dieses gemeinsame Gerät kann z.B. zwischen dem zweiten Ende 3b des zumindest einen Speisekabels 3 und der zumindest einen Antennenordnung 8 eingesetzt werden. Zwischen den beiden Signalleitungsanschlüssen 31a und 31b können zumindest eine elektrische Versorgungspannung, ein AISG-Signal und/oder Mobilfunksignale hindurch geschleift werden. Aufmodulierte IP-Datenströme werden vorzugsweise ausgekoppelt und dem IP-Modem 25 zugeführt, welches diese umsetzt (Layer-1-Konvertierung) und an entsprechende IP-Geräte 11 weitergibt. Die IP-Daten werden in diesem Ausführungsbeispiel nicht von zumindest einem Signalleitungsanschluss 31a zum weiteren Signalleitungsanschluss 31b hindurch geschleift.

Dies geschieht erst in dem Ausführungsbeispiel aus Figur 11A. In diesem werden sowohl die elektrische Versorgungsspannung als auch das AISG-Signal, die Mobilfunksignale und die IP-Daten von dem zumindest einen Signalleitungsanschluss 31a zum weiteren Signalleitungsanschluss 31b hindurch geschleift (und umgekehrt). Die IP-Daten werden dabei ausgekoppelt und dem IP-Modem 25 zugeführt. Selbiges gilt auch für die elektrische Versorgungspannung, die einer elektrischen Versorgungseinrichtung 13 zugeführt wird, die wiederum das IP-Gerät 11 mit elektrischer Energie versorgt.

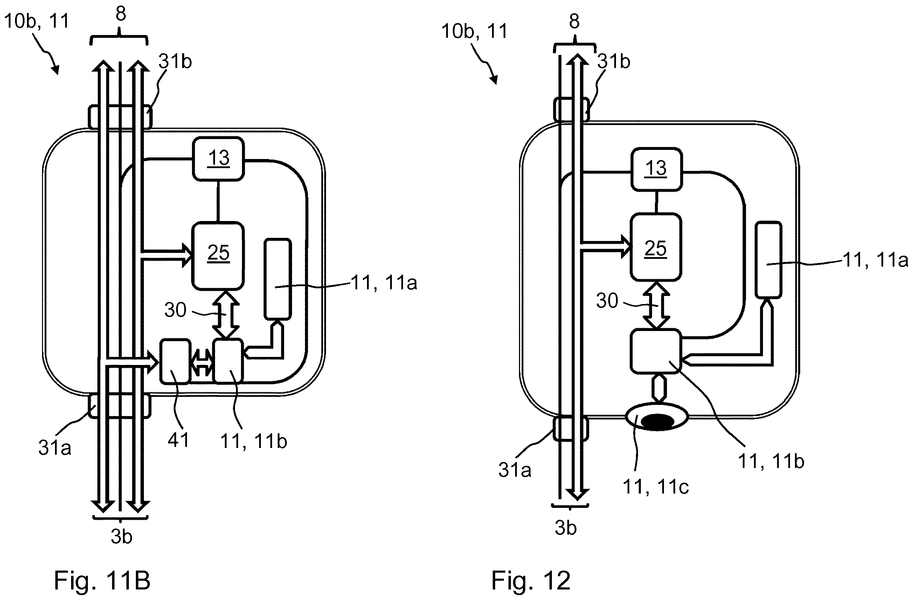

Figur 11B zeigt eine Weiterbildung des Ausführungsbeispiels aus Figur 11A. Neben IP-Daten, die dem IP-Modem 25 zugeführt werden, werden auch AISG-Daten ausgekoppelt und einem AISG-Modem 41 zugeführt. Das AISG-Modem 41 ist wiederum mit dem zumindest einen IP-Gerät 11, insbesondere dem Mikrocontroller 11b verbunden. Die elektrische Versorgungseinrichtung 13 versorgt dabei das IP-Gerät 11, bestehend aus dem Mikrocontroller 11b und zumindest einem Sensor bzw. einem Sensorcluster 11a sowie das AISG-Modem 41. Selbstverständlich wird auch das IP-Modem 25 von der elektrischen Versorgungseinrichtung 13 mit elektrischer Energie versorgt. In diesem Fall kann sowohl über ein AISG-Signal, als auch über ein IP-Signal mit dem IP-Gerät 11 kommuniziert werden.

In Figur 12 ist ein weiteres Ausführungsbeispiel dargestellt. In diesem Fall werden mehrere Sensoren und/oder Aktoren als IP-Geräte 11 eingesetzt. Der Mikrokontroller 11b, welcher mit dem IP-Modem 25 zum Datenaustausch verbunden ist, steuert beispielsweise einen Aktor 11a (z.B. IP-RET-Einheit) an. Bei diesem IP-Gerät kann es sich selbstverständlich auch um einen Sensor handeln. Gleichzeitig ist der Mikrocontroller 11b auch noch mit einem weiteren IP-Gerät 11c verbunden, bei welchem es sich in diesem Fall um einen integrierten Bildsensor (Webcam) handelt. Dieser dient beispielsweise zur Überwachung des Installationsorts und kann im Sinne der öffentlichen Sicherheit eingesetzt werden.

Grundsätzlich kann es sich bei der IP-RET-Einheit 11a beispielsweise um eine integrierte oder um eine im Feld austauschbare Single- oder Multi-RET-Einheit handeln.

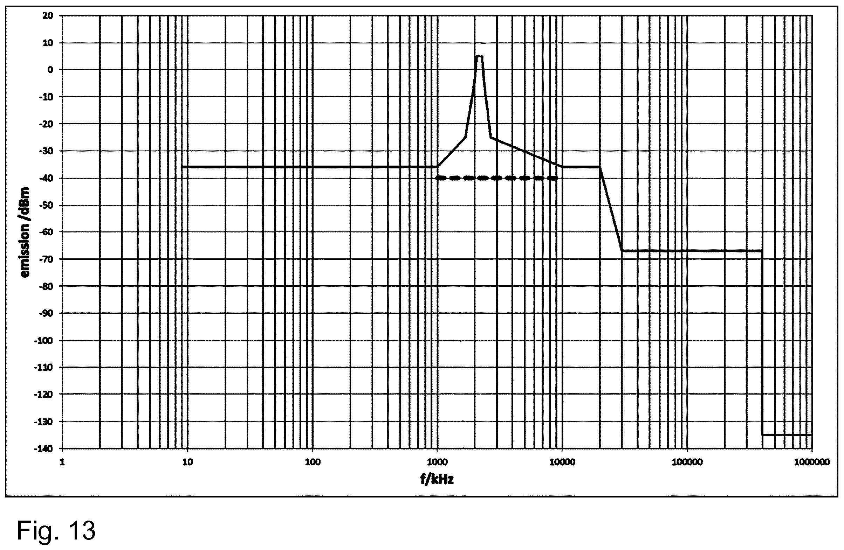

In Figur 13 ist eine kurze Übersicht dargestellt, die angibt in welchen Frequenzbereichen und welchen Signalpegeln die IP-Daten in einem Narrow-Band-IOT-Protokoll über das zumindest eine geschirmte Speisekabel 3 übertragen werden können. Dabei ist ein Ausschnitt aus der im AISG-Standard verankerten "Spectrum Emission Mask" für ein ASIG-Modem 41 dargestellt. Die durchgezogene Linie gibt die maximale spektrale Leistung an, welche vom AISG-Modem 41, welches im ersten und zweiten AISG-Umsetzer 7a, 7b enthalten ist, auf das zumindest eine geschirmte Speisekabel 3 emittiert werden darf.

Sendet das AISG-Modem 41 ein On-Signal, darf bei der Sendefrequenz von 2,176 MHz der Pegel von +5 dBm nicht überschritten werden. Bei einem Off-Signal muss der Pegel ≤ 40 dBm sein (gestrichelte Linie).
Der erste und der zweite IP-Umsetzer 10a, 10b sind dabei insbesondere derart ausgebildet, dass diese IP-Daten auf dem zumindest einen geschirmten Speisekabel 3 übertragen und deren Signal-Leistung unterhalb des Off-AISG-Signals liegen. Vorzugsweise werden die IP-Daten auch unterhalb einer Frequenz von 20 MHz, 15 MHz, 12,5 MHz, 10 MHz, 5 MHz, 1 MHz, 750 kHz, 500 kHz übertragen. Da für derartige Anwendungen selten hohe Datenraten benötigt werden, sollte ein Modulationsverfahren verwendet werden, welches einerseits robust ist und nur eine geringe Bandbreite benötigt, so dass die Mobilfunksignale, die i.d.R deutlich über 20 MHz liegen, nicht gestört werden.

## Patentansprüche

1. Heterogene Mobilfunkanordnung (1) zur Versorgung zumindest einer Mobilfunkzelle mit Mobilfunkdienstleistungen mit den folgenden Merkmalen:
- es ist zumindest eine Antennenanordnung (8) vorgesehen, wobei die zumindest eine Antennenanordnung (8) eine Vielzahl von Strahlerelementen umfasst, die in einem Antennengehäuse angeordnet sind und wobei die Antennenanordnung (8) dazu ausgebildet ist, um zu senden und/oder zu empfangen;
- es ist zumindest ein Antennenmast (4) oder ein Antennenhalter mit einem ersten und einem zweiten Ende vorgesehen, wobei das erste Ende an einer Gebäudestruktur und/oder einem Fundament befestigt oder befestigbar ist und wobei die zumindest eine Antennenanordnung (8) näher an dem zweiten Ende befestigt ist als an dem ersten Ende;
- es ist zumindest ein geschirmtes Speisekabel (3) mit einem ersten und einem gegenüberliegenden zweiten Ende (3a, 3b) vorgesehen, das dazu ausgebildet ist, die zumindest eine Antennenanordnung (8) mit elektrischer Energie zu versorgen, wobei über das zumindest eine geschirmte Speisekabel (3) ein AISG-Signal und Mobilfunksignale übertragbar sind;
**gekennzeichnet durch** die folgenden Merkmale:
- es sind zumindest ein erster und ein zweiter IP-Umsetzer (10a, 10b) und zumindest ein erstes IP-Gerät (11, 11a, 11b, 11c) vorgesehen, wobei beide IP-Umsetzer (10a, 10b) jeweils einen IP-Anschluss (30) und jeweils zumindest einen Signalleitungsanschluss (31a, 31b) aufweisen;
- der erste IP-Umsetzer (10a) ist mit seinem IP-Anschluss (30) mit einem übergeordneten IP-Netzwerk (6) verbindbar oder verbunden und der zweite IP-Umsetzer (10b) ist mit seinem IP-Anschluss (30) mit dem zumindest einen ersten IP-Gerät (11, 11a, 11b, 11c) verbunden;
- der zumindest eine Signalleitungsanschluss (31a) des ersten IP-Umsetzers (10a) und der zumindest eine Signalleitungsanschluss (31a) des zweiten IP-Umsetzers (10b) sind unmittelbar oder mittelbar mit dem zumindest einen geschirmten Speisekabel (3) elektrisch verbunden, über das auch das AISG-Signal und die Mobilfunksignale übertragbar sind, wodurch IP-Daten zwischen dem übergeordneten IP-Netzwerk (6) und dem zumindest einen ersten IP-Gerät (11, 11a, 11b, 11c) austauschbar sind.

2. Heterogene Mobilfunkanordnung (1) nach Anspruch 1, **gekennzeichnet durch** die folgenden Merkmale:
- der erste IP-Umsetzer (10a) ist dazu ausgebildet, eine Layer-1-Konvertierung zwischen seinem IP-Anschluss (30) und seinem zumindest einen Signalleitungsanschluss (31a) durchzuführen; und/oder
- der zweite IP-Umsetzer (10b) ist dazu ausgebildet, eine Layer-1-Konvertierung zwischen seinem IP-Anschluss (30) und seinem zumindest einen Signalleitungsanschluss (31a) durchzuführen.

3. Heterogene Mobilfunkanordnung (1) nach Anspruch 2, **gekennzeichnet durch** die folgenden Merkmale:
- die Layer-1-Konvertierung umfasst die Umsetzung eines Ethernet-Protokolls in einen NarrowBand-IOT-Protokoll.

4. Heterogene Mobilfunkanordnung (1) nach einem der vorherigen Ansprüche, **gekennzeichnet durch** das folgende Merkmal:
- der erste und der zweite IP-Umsetzer (10a, 10b) sind dazu ausgebildet, untereinander IP-Daten über das zumindest eine geschirmte Speisekabel (3) auszutauschen, wobei die Daten mit einer Frequenz von weniger als 20 MHz, 15 MHz, 10 MHz, 5 MHz, 1 MHz, 750 kHz oder 500 kHz übertragen werden.

5. Heterogene Mobilfunkanordnung (1) nach einem der vorherigen Ansprüche, **gekennzeichnet durch** das folgende Merkmal:
- der erste und der zweite IP-Umsetzer (10a, 10b) sind dazu ausgebildet, untereinander IP-Daten über das zumindest eine geschirmte Speisekabel (3) auszutauschen, wobei der Signalpegel niedriger ist als der Signalpegel eines AISG-Signals, das ebenfalls über dasselbe zumindest eine geschirmte Speisekabel (3) übertragbar ist.

6. Heterogene Mobilfunkanordnung (1) nach einem der vorherigen Ansprüche, **gekennzeichnet durch** die folgenden Merkmale:
- es ist eine IP-Antennenanordnung (20) vorgesehen, die an, in oder auf der zumindest einen Antennenanordnung (8) oder an dem Antennenmast (4) oder Antennenhalter angeordnet ist;
- der erste IP-Umsetzer (10a) ist mit seinem IP-Anschluss (30) mit der IP-Antennenanordnung (20) verbunden und dazu ausgebildet, über die IP-Antennenanordnung (20) eine Verbindung zu dem übergeordneten IP-Netzwerk (6) herzustellen, wobei über die zumindest einen Signalleitungsanschlüsse (31a) des ersten und des zweiten IP-Umsetzers (10a, 10b) das übergeordnete IP-Netzwerk (6) mit dem IP-Gerät (11, 11a, 11b, 11c) verbindbar ist oder verbunden ist.

7. Heterogene Mobilfunkanordnung (1) nach einem der vorherigen Ansprüche, **gekennzeichnet durch** die folgenden Merkmale:
- bei dem IP-Gerät (11, 11a, 11b, 11c) handelt es sich um:
a) zumindest einen Temperatursensor; und/oder
b) zumindest einen Helligkeitssensor; und/oder
c) zumindest einen GNSS-Sensor; und/oder
d) zumindest einen Regensensor; und/oder
e) zumindest einen Windsensor; und/oder
f) zumindest einen Luftverschmutzungssensor; und/oder
g) zumindest einen Luftdrucksensor; und/oder
h) zumindest einen Luftfeuchtigkeitssensor; und/oder
i) zumindest einen Mikrocontroller; und/oder
j) zumindest eine Webcam; und/oder
k) zumindest eine RET-Einheit; und/oder
l) zumindest einen Tower-Mounted-Amplifier; und/oder
m) zumindest einen 5G-Repeater.

8. Heterogene Mobilfunkanordnung (1) nach einem der vorherigen Ansprüche, **gekennzeichnet durch** die folgenden Merkmale:
- bei dem IP-Gerät (11, 11a, 11b, 11c) handelt es sich um den 5G-Repeater, wobei der 5G-Repeater an dem Antennenmast (4) oder Antennenhalter mit der zumindest einen Antennenanordnung (8) angeordnet ist; und/oder
- ein weiterer 5G-Repeater (15) ist vorgesehen und an einem anderen Antennenmast (16) oder Antennenhalter angeordnet, wobei der weitere 5G-Repeater (15) über ein weiteres Speisekabel (17) mit Energie versorgt wird und wobei:
a) an dem Antennenmast (4) oder Antennenhalter mit der zumindest einen Antennenanordnung (8) eine Speiseantenne vorgesehen ist, die auf den weiteren 5G-Repeater (15) gerichtet ist und diesen speist; und/oder
b) ein erster weiterer IP-Umsetzer (18a) vorgesehen ist, der mit seinem IP-Anschluss mit dem übergeordneten IP-Netzwerk (6) oder einem weiteren übergeordneten IP-Netzwerk verbunden ist und wobei ein zweiter weiterer IP-Umsetzer (18b) vorgesehen ist, der in dem weiteren 5G-Repeater (15) integriert oder an diesem angeordnet ist, wobei die beiden weiteren IP-Umsetzer (18a, 18b) dazu ausgebildet sind, über ihre Signalleitungsanschlüsse und das weitere Speisekabel (17) IP-Daten auszutauschen, wodurch der weitere 5G-Repeater (15) mit dem übergeordneten IP-Netzwerk (6) oder dem weiteren übergeordneten IP-Netzwerk verbunden oder verbindbar ist.

9. Heterogene Mobilfunkanordnung (1) nach einem der vorherigen Ansprüche, **gekennzeichnet durch** die folgenden Merkmale:
- es ist eine Energieversorgungseinrichtung (22) vorgesehen, die dazu ausgebildet ist, eine Versorgungsspannung zu erzeugen;
- die Energieversorgungseinrichtung (22) ist mittelbar oder unmittelbar mit einem ersten Ende (3a) des zumindest einen geschirmten Speisekabels (3) verbunden, wobei ein zweites Ende (3b) des zumindest einen geschirmten Speisekabels (3) mittelbar oder unmittelbar mit der zumindest einen Antennenanordnung (8) verbindbar ist, worüber diese mit elektrischer Energie versorgbar ist.

10. Heterogene Mobilfunkanordnung (1) nach Anspruch 9, **gekennzeichnet durch** die folgenden Merkmale:
- der erste IP-Umsetzer (10a) ist zwischen der Energieversorgungseinrichtung (22) und dem ersten Ende (3a) des zumindest einen geschirmten Speisekabels (3) angeordnet, wobei er mit seinem zumindest einen Signalleitungsanschluss (31a) mittelbar oder unmittelbar mit dem ersten Ende (3a) des zumindest einen geschirmten Speisekabels (3) verbunden ist;
- der erste IP-Umsetzer (10a) ist dazu ausgebildet, die Versorgungsspannung von der Energieversorgungseinrichtung (22) zu dem ersten Ende (3a) des zumindest einen geschirmten Speisekabels (3) durchzuschleifen.

11. Heterogene Mobilfunkanordnung (1) nach Anspruch 10, **gekennzeichnet durch** das folgende Merkmal:
- der erste IP-Umsetzer (10a) ist in der Energieversorgungseinrichtung (22) integriert oder als separate Hardware neben der Energieversorgungseinrichtung (22) ausgebildet.

12. Heterogene Mobilfunkanordnung (1) nach Anspruch 10 oder 11, **gekennzeichnet durch** die folgenden Merkmale:
- es ist eine erste IP-Weiche (35) vorgesehen, die zwischen der Energieversorgungseinrichtung (22) und dem ersten Ende (3a) des zumindest einen geschirmten Speisekabels (3) angeordnet ist;
- der erste IP-Umsetzer (10a) ist mit der ersten IP-Weiche (35) verbunden, wobei die erste IP-Weiche (35) dazu ausgebildet ist:
a) die Versorgungsspannung von der Energieversorgungseinrichtung (22) zu dem ersten Ende (3a) des zumindest einen geschirmten Speisekabels (3) durchzuschleifen; und
b) IP-Daten zwischen dem ersten IP-Umsetzer (10a) und dem ersten Ende (3a) des geschirmten Speisekabels (3) zu übertragen, wodurch der erste IP-Umsetzer (10a) mittelbar mit dem ersten Ende (3a) des geschirmten Speisekabels (3) verbunden ist.

13. Heterogene Mobilfunkanordnung (1) nach einem der Ansprüche 9 bis 12, **gekennzeichnet durch** die folgenden Merkmale:
- der zweite IP-Umsetzer (10b) ist zwischen dem zweiten Ende (3b) des zumindest einen geschirmten Speisekabels (3) und der zumindest einen Antennenanordnung (8) angeordnet, wobei der zweite IP-Umsetzer (10b) mit seinem zumindest einen Signalleitungsanschluss (31a) mittelbar oder unmittelbar mit dem zweiten Ende (3b) des zumindest einen geschirmten Speisekabels (3) verbunden und dazu ausgebildet ist, die Versorgungsspannung von dem zweiten Ende (3b) des zumindest einen geschirmten Speisekabels (3) zu der zumindest einen Antennenanordnung (8) durchzuschleifen;
oder
- es ist eine zweite IP-Weiche (35) vorgesehen, die zwischen dem zweiten Ende (3b) des zumindest einen geschirmten Speisekabels (3) und der zumindest einen Antennenanordnung (8) angeordnet ist, wobei der zweite IP-Umsetzer (10b) mit der zweiten IP-Weiche (35) verbunden und dazu ausgebildet ist:
a) die Versorgungsspannung von dem zweiten Ende (3b) des zumindest einen geschirmten Speisekabels (3) zu der zumindest einen Antennenanordnung (8) durchzuschleifen; und
b) IP-Daten zwischen dem zweiten IP-Umsetzer (10b) und dem zweiten Ende (3b) des geschirmten Speisekabels (3) zu übertragen, wodurch der zweite IP-Umsetzer (10b) mittelbar mit dem zweiten Ende (3b) des geschirmten Speisekabels (3) verbunden ist.

14. Heterogene Mobilfunkanordnung (1) nach Anspruch 13, **gekennzeichnet durch** das folgende Merkmal:
- der zweite IP-Umsetzer (10b) umfasst eine Versorgungseinrichtung (13), die dazu ausgebildet ist, die Versorgungsspannung aus dem zumindest einen geschirmten Speisekabel (3) zu entnehmen und dem IP-Gerät (11, 11a, 11b, 11c), beispielsweise über Power-Over-Ethernet an seinem IP-Anschluss (30) zu Verfügung zu stellen.

15. Heterogene Mobilfunkanordnung (1) nach einem der vorherigen Ansprüche, **gekennzeichnet durch** die folgenden Merkmale:
- es ist eine Basisstation (2) vorgesehen;
- das zumindest eine geschirmte Speisekabel (3) ist mit seinem ersten Ende (3a) mittelbar oder unmittelbar mit der Basisstation (2) und mit seinem zweiten Ende (3b) mittelbar oder unmittelbar mit der zumindest einen Antennenanordnung (8) verbunden;
- es ist ein AISG-Master (5) vorgesehen, wobei der AISG-Master (5):
a) in die Basisstation (2) integriert ist; oder
b) als separate Hardware neben der Basisstation (2) ausgebildet ist;
- es ist zumindest ein AISG-Slave (9, 9a, 9b) vorgesehen, wobei der zumindest eine AISG-Slave (9, 9a, 9b):
a) in der zumindest einen Antennenanordnung (8) integriert ist; und/oder
b) an dem Antennenmast (4) oder dem Antennenhalter angeordnet ist;
- AISG-Daten sind auf dem zumindest einen geschirmten Speisekabel (3) zwischen dem AISG-Master (5) und dem zumindest einen AISG-Slave (9, 9a, 9b) in einem ON/OFF-Keying-Verfahren übertragbar.

## Claims

1. A heterogeneous mobile radio arrangement (1) for supplying at least one mobile radio cell with mobile radio services, comprising the following features:
- at least one antenna arrangement (8) is provided, wherein the at least one antenna arrangement (8) comprises a multiplicity of radiating elements which are arranged in an antenna housing, and wherein the antenna arrangement (8) is designed to transmit and/or to receive;
- at least one antenna mast (4) or an antenna holder having a first and a second end is provided, wherein the first end is attached or attachable to a building structure and/or a foundation, and wherein the at least one antenna arrangement (8) is attached closer to the second end than to the first end;
- at least one shielded feeder cable (3) having a first and an opposite, second end (3a, 3b) is provided, which is designed to supply the at least one antenna arrangement (8) with electric power, wherein an AISG signal and mobile radio signals are transmittable via the at least one shielded feeder cable (3);
**characterized by** the following features:
- at least one first and one second IP converter (10a, 10b) and at least one first IP device (11, 11a, 11b, 11c) are provided, wherein both IP converters (11a, 11b) have a respective IP connection (30) and at least one respective signal line connection (31a, 31b);
- the first IP converter (10a) is connectable or connected by its IP connection (30) to a superordinate IP network (6) and the second IP converter (10b) is connected by its IP connection (30) to the at least one first IP device (11, 11a, 11b, 11c);
- the at least one signal line connection (31a) of the first IP converter (10a) and the at least one signal line connection (31a) of the second IP converter (10b) are electrically connected directly or indirectly to the at least one shielded feeder cable (3), via which the AISG signal and the mobile radio signals can also be transmitted, whereby IP data can be exchanged between the superordinate IP network (6) and the at least one first IP device (11, 11a, 11b, 11c).

2. Heterogeneous mobile radio arrangement (1) according to claim 1, **characterized by** the following features:
- the first IP converter (10a) is designed to perform a layer 1 conversion between its IP connection (30) and its at least one signal line connection (31a); and/or
- the second IP converter (10b) is designed to perform a layer 1 conversion between its IP connection (30) and its at least one signal line connection (31a).

3. Heterogeneous mobile radio arrangement (1) according to claim 2, **characterized by** the following features:
- the layer 1 conversion comprises the conversion of an Ethernet protocol into a narrowband IOT protocol.

4. Heterogeneous mobile radio arrangement (1) according to any of the preceding claims, **characterized by** the following feature:
- the first and the second IP converter (10a, 10b) are designed to exchange IP data with each other via the at least one shielded feeder cable (3), the data being transmitted at a frequency of less than 20 MHz, 15 MHz, 10 MHz, 5 MHz, 1 MHz, 750 kHz or 500 kHz.

5. Heterogeneous mobile radio arrangement (1) according to any of the preceding claims, **characterized by** the following feature:
- the first and the second IP converter (10a, 10b) are designed to exchange IP data with each other via the at least one shielded feeder cable (3), the signal level being lower than the signal level of an AISG signal which can also be transmitted via the same at least one shielded feeder cable (3).

6. Heterogeneous mobile radio arrangement (1) according to any of the preceding claims, **characterized by** the following features:
- an IP antenna arrangement (20) is provided, which is arranged at, in, or on the at least one antenna arrangement (8) or on the antenna mast (4) or antenna holder;
- the first IP converter (10a) is connected by its IP connection (30) to the IP antenna arrangement (20) and is designed to establish a connection to the superordinate IP network (6) via the IP antenna arrangement (20), wherein the superordinate IP network (6) is connectable or connected to the IP device (11, 11a, 11b, 11c) via the at least one signal line connections (31a) of the first and second IP converter (10a, 10b).

7. Heterogeneous mobile radio arrangement (1) according to any of the preceding claims, **characterized by** the following features:
- the IP device (11, 11a, 11b, 11c) is:
a) at least one temperature sensor; and/or
b) at least one brightness sensor; and/or
c) at least one GNSS sensor; and/or
d) at least one rain sensor; and/or
e) at least one wind sensor; and/or
f) at least one air pollution sensor; and/or
g) at least one air pressure sensor; and/or
h) at least one humidity sensor; and/or
i) at least one microcontroller; and/or
j) at least one webcam; and/or
k) at least one RET unit; and/or
l) at least one tower-mounted amplifier; and/or
m) at least one 5G repeater.

8. Heterogeneous mobile radio arrangement (1) according to any of the preceding claims, **characterized by** the following features:
- the IP device (11, 11a, 11b, 11c) is the 5G repeater, wherein the 5G repeater is arranged on the antenna mast (4) or antenna holder with the at least one antenna arrangement (8); and/or
- a further 5G repeater (15) is provided and is arranged at another antenna mast (16) or antenna holder, wherein the further 5G repeater (15) is supplied with power via a further feeder cable (17), and wherein:
a) a feed antenna is provided on the antenna mast (4) or antenna holder with the at least one antenna arrangement (8), the feed antenna is directed towards the further 5G repeater (15) and feeds it; and/or
b) a first further IP converter (18a) is provided, which is connected by its IP connection to the superordinate IP network (6) or a further superordinate IP network, and wherein a second further IP converter (18b) is provided, which is integrated in or arranged at the further 5G repeater (15), wherein the two further IP converters (18a, 18b) are designed to exchange IP data via their signal line connections and the further feeder cable (17), whereby the further 5G repeater (15) is connected or connectable to the superordinate IP network (6) or the further superordinate IP network.

9. Heterogeneous mobile radio arrangement (1) according to any of the preceding claims, **characterized by** the following features:
- a power supply device (22) is provided, which is designed to generate a supply voltage;
- the power supply device (22) is connected indirectly or directly to a first end (3a) of the at least one shielded feeder cable (3), wherein a second end (3b) of the at least one shielded feeder cable (3) is connectable indirectly or directly to the at least one antenna arrangement (8), via which the antenna arrangement (8) can be supplied with electric power.

10. Heterogeneous mobile radio arrangement (1) according to claim 9, **characterized by** the following features:
- the first IP converter (10a) is arranged between the power supply device (22) and the first end (3a) of the at least one shielded feeder cable (3), wherein it is connected by its at least one signal line connection (31a) indirectly or directly to the first end (3a) of the at least one shielded feeder cable (3);
- the first IP converter (10a) is designed to loop through the supply voltage from the power supply device (22) to the first end (3a) of the at least one shielded feeder cable (3).

11. Heterogeneous mobile radio arrangement (1) according to claim 10, **characterized by** the following feature:
- the first IP converter (10a) is integrated in the power supply device (22) or is designed as separate hardware next to the power supply device (22).

12. Heterogeneous mobile radio arrangement (1) according to claim 10 or 11, **characterized by** the following features:
- a first IP switch (35) is provided, which is arranged between the power supply device (22) and the first end (3a) of the at least one shielded feeder cable (3);
- the first IP converter (10a) is connected to the first IP switch (35), wherein the first IP switch (35) is designed to:
a) loop through the supply voltage from the power supply device (22) to the first end (3a) of the at least one shielded feeder cable (3); and
b) transmit IP data between the first IP converter (10a) and the first end (3a) of the shielded feeder cable (3), whereby the first IP converter (10a) is indirectly connected to the first end (3a) of the shielded feeder cable (3).

13. Heterogeneous mobile radio arrangement (1) according to any one of claims 9 to 12, **characterized by** the following features:
- the second IP converter (10b) is arranged between the second end (3b) of the at least one shielded feeder cable (3) and the at least one antenna arrangement (8), wherein the second IP converter (10b) is connected by its at least one signal line connection (31a) indirectly or directly to the second end (3b) of the at least one shielded feeder cable (3) and is designed to loop through the supply voltage from the second end (3b) of the at least one shielded feeder cable (3) to the at least one antenna arrangement (8); or
- a second IP switch (35) is provided, which is arranged between the second end (3b) of the at least one shielded feeder cable (3) and the at least one antenna arrangement (8), wherein the second IP converter (10b) is connected to the second IP switch (35) and is designed to:
a) loop through the supply voltage from the second end (3b) of the at least one shielded feeder cable (3) to the at least one antenna arrangement (8); and
b) transmit IP data between the second IP converter (10b) and the second end (3b) of the shielded feeder cable (3), whereby the second IP converter (10b) is indirectly connected to the second end (3b) of the shielded feeder cable (3).

14. Heterogeneous mobile radio arrangement (1) according to claim 13, **characterized by** the following feature:
- the second IP converter (10b) comprises a supply device (13), which is designed to draw the supply voltage from the at least one shielded feeder cable (3) and to make it available to the IP device (11, 11a, 11b, 11c), for example via Power-over-Ethernet, at its IP connection (30).

15. Heterogeneous mobile radio arrangement (1) according to any of the preceding claims, **characterized by** the following features:
- a base station (2) is provided;
- the at least one shielded feeder cable (3) is connected by its first end (3a) indirectly or directly to the base station (2) and by its second end (3b) indirectly or directly to the at least one antenna arrangement (8);
- an AISG master (5) is provided, wherein the AISG master (5):
a) is integrated in the base station (2); or
b) is designed as separate hardware next to the base station (2);
- at least one AISG slave (9, 9a, 9b) is provided, wherein the at least one AISG slave (9, 9a, 9b):
a) is integrated in the at least one antenna arrangement (9); and/or
b) is arranged on the antenna mast (4) or the antenna holder; and
- AISG data can be transmitted on the at least one shielded feeder cable (3) between the AISG master (5) and the at least one AISG slave (9, 9a, 9b) in an ON/OFF keying procedure.

## Revendications

1. Ensemble de téléphonie mobile hétérogène (1) permettant d'assurer des services de téléphonie mobile auprès d'au moins une cellule de téléphonie mobile, présentant les particularités suivantes :
- il est prévu au moins un ensemble d'antenne (8), ledit au moins un ensemble d'antenne (8) comprenant une pluralité d'éléments rayonnants disposés dans un boîtier d'antenne et ledit ensemble d'antenne (8) étant conçu pour émettre et/ou recevoir ;
- il est prévu au moins un mât d'antenne (4) ou un support d'antenne présentant une première et une deuxième extrémité, ladite première extrémité étant ou pouvant être fixée à une structure de bâtiment et/ou à des fondations et ledit au moins un ensemble d'antenne (8) étant fixé plus près de la deuxième extrémité que de la première extrémité ;
- il est prévu au moins un câble d'alimentation blindé (3) présentant une première extrémité (3a) et une deuxième extrémité (3b) opposée à cette dernière, et conçu pour alimenter l'au moins un ensemble d'antenne (8) en énergie électrique, ledit au moins un câble d'alimentation blindé (3) permettant de transmettre un signal AISG et des signaux de téléphonie mobile ;
**caractérisé par** les particularités suivantes :
- il est prévu au moins un premier et un deuxième convertisseur IP (10a, 10b) et au moins un premier appareil IP (11, 11a, 11b, 11c), les deux convertisseurs IP (10a, 10b) présentant chacun une connexion IP (30) et chacun au moins une connexion de ligne de signaux (31a, 31b) ;
- le premier convertisseur IP (10a) est ou peut être relié, par sa connexion IP (30), à un réseau IP de rang supérieur (6), et le deuxième convertisseur IP (10b) est relié, par sa connexion IP (30), à l'au moins un premier appareil IP (11, 11a, 11b, 11c) ;
- l'au moins une connexion de ligne de signaux (31a) du premier convertisseur IP(10a) et l'au moins une connexion de ligne de signaux (31a) du deuxième convertisseur IP(10b) sont reliées électriquement, de manière directe ou indirecte, à l'au moins un câble d'alimentation blindé (3), par le biais duquel le signal AISG et les signaux de téléphonie mobile peuvent également être transmis, moyennant quoi des données IP peuvent être échangées entre le réseau IP de rang supérieur (6) et l'au moins un premier appareil IP (11, 11a, 11b, 11c).

2. Ensemble de téléphonie mobile hétérogène (1) selon la revendication 1, **caractérisé par** les particularités suivantes :
- le premier convertisseur IP (10a) est conçu pour effectuer une conversion de couche 1 entre sa connexion IP (30) et son au moins une connexion de ligne de signaux (31a) ; et/ou
- le deuxième convertisseur IP (10b) est conçu pour effectuer une conversion de couche 1 entre sa connexion IP (30) et son au moins une connexion de ligne de signaux (31a).

3. Ensemble de téléphonie mobile hétérogène (1) selon la revendication 2, **caractérisé par** les particularités suivantes :
- la conversion de couche 1 comprend la transformation d'un protocole Ethernet en un protocole IOT à bande étroite.

4. Ensemble de téléphonie mobile hétérogène (1) selon l'une des revendications précédentes, **caractérisé par** la particularité suivante :
- le premier et le deuxième convertisseur IP (10a, 10b) sont conçus pour échanger entre eux des données IP par le biais de l'au moins un câble d'alimentation blindé (3), lesdites données étant transmises à une fréquence de moins de 20 MHz, 15 MHz, 10 MHz, 5 MHz, 1 MHz, 750 kHz ou 500 kHz.

5. Ensemble de téléphonie mobile hétérogène (1) selon l'une des revendications précédentes, **caractérisé par** la particularité suivante :
- le premier et le deuxième convertisseur IP (10a, 10b) sont conçus pour échanger entre eux des données IP par le biais de l'au moins un câble d'alimentation blindé (3), le niveau de signal étant inférieur au niveau d'un signal AISG également susceptible d'être transmis par le biais du même au moins un câble d'alimentation blindé (3).

6. Ensemble de téléphonie mobile hétérogène (1) selon l'une des revendications précédentes, **caractérisé par** la particularité suivante :
- il est prévu un ensemble d'antenne IP (20) disposé au niveau, dans ou sur l'au moins un ensemble d'antenne (8) ou au niveau du mât d'antenne (4) ou du support d'antenne ;
- le premier convertisseur IP (10a) est relié, par sa connexion IP (30), à l'ensemble d'antenne IP (20) et est conçu pour produire une liaison au réseau IP de rang supérieur (6) par le biais de l'ensemble d'antenne IP (20), ledit réseau IP de rang supérieur (6) étant ou pouvant être relié à l'appareil IP (11, 11a, 11b, 11c) par le biais de l'au moins une connexion de ligne de signaux (31a) du premier et du deuxième convertisseur IP (10a, 10b).

7. Ensemble de téléphonie mobile hétérogène (1) selon l'une des revendications précédentes, **caractérisé par** les particularités suivantes :
- l'appareil IP (11, 11a, 11b, 11c) consiste en :
a) au moins un capteur de température ; et/ou
b) au moins un capteur de luminosité ; et/ou
c) au moins un capteur GNSS ; et/ou
d) au moins un détecteur de pluie ; et/ou
e) au moins un détecteur de vent ; et/ou
f) au moins un détecteur de pollution de l'air ; et/ou
g) au moins un capteur de pression de l'air ; et/ou
h) au moins un capteur d'humidité de l'air ; et/ou
i) au moins un microcontrôleur ; et/ou
j) au moins une webcam ; et/ou
k) au moins une unité RET ; et/ou
l) au moins un amplificateur monté sur tour ; et/ou
m) au moins un répéteur 5G.

8. Ensemble de téléphonie mobile hétérogène (1) selon l'une des revendications précédentes, **caractérisé par** les particularités suivantes :
- l'appareil IP (11, 11a, 11b, 11c) consiste en ledit répéteur 5G, lequel répéteur 5G est disposé au niveau du mât d'antenne (4) ou du support d'antenne présentant ledit au moins un ensemble d'antenne (8) ; et/ou
- il est prévu un autre répéteur 5G (15), lequel est disposé au niveau d'un autre mât d'antenne (16) ou support d'antenne, ledit autre répéteur 5G (15) étant alimenté en énergie par le biais d'un autre câble d'alimentation (17), étant entendu que :
a) il est prévu une antenne d'alimentation au niveau du mât d'antenne (4) ou du support d'antenne présentant l'au moins un ensemble d'antenne (8), laquelle antenne est dirigée vers l'autre répéteur 5G (15) et alimente ce dernier ; et/ou
b) il est prévu un premier autre convertisseur IP (18a) qui est relié, par sa connexion IP, au réseau IP de rang supérieur (6) ou à un autre réseau IP de rang supérieur et il est prévu un deuxième autre convertisseur IP (18b) qui est intégré dans l'autre répéteur 5G (15) ou disposé au niveau de celui-ci, lesdits au moins deux autres convertisseurs IP (18a, 18b) étant conçus pour échanger des données IP, par le biais de leurs connexions de ligne de signaux et de l'autre câble d'alimentation (17), moyennant quoi l'autre répéteur 5G (15) est ou peut être relié au réseau IP de rang supérieur (6) ou à l'autre réseau IP de rang supérieur.

9. Ensemble de téléphonie mobile hétérogène (1) selon l'une des revendications précédentes, **caractérisé par** les particularités suivantes :
- il est prévu un dispositif d'alimentation en énergie (22) conçu pour produire une tension d'alimentation ;
- le dispositif d'alimentation en énergie (22) est relié directement ou indirectement à une première extrémité (3a) de l'au moins un câble d'alimentation blindé (3), une deuxième extrémité (3b) de l'au moins un câble d'alimentation blindé (3) pouvant être reliée directement ou indirectement à l'au moins un ensemble d'antenne (8), par le biais duquel ledit ensemble d'antenne peut être alimenté en énergie électrique.

10. Ensemble de téléphonie mobile hétérogène (1) selon la revendication 9, **caractérisé par** les particularités suivantes :
- le premier convertisseur IP (10a) est disposé entre le dispositif d'alimentation en énergie (22) et la première extrémité (3a) de l'au moins un câble d'alimentation blindé (3), ledit premier convertisseur IP étant relié directement ou indirectement, par son au moins une connexion de ligne de signaux (31a), à la première extrémité (3a) de l'au moins un câble d'alimentation blindé (3) ;
- le premier convertisseur IP (10a) est conçu pour faire passer la tension d'alimentation, du dispositif d'alimentation en énergie (22) vers la première extrémité (3a) de l'au moins un câble d'alimentation blindé (3).

11. Ensemble de téléphonie mobile hétérogène (1) selon la revendication 10, **caractérisé par** la particularité suivante :
- le premier convertisseur IP (10a) est intégré dans le dispositif d'alimentation en énergie (22) ou est conçu sous la forme d'un objet matériel séparé à côté du dispositif d'alimentation en énergie (22).

12. Ensemble de téléphonie mobile hétérogène (1) selon la revendication 10 ou 11, **caractérisé par** les particularités suivantes :
- il est prévu un premier aiguilleur IP (35) disposé entre le dispositif d'alimentation en énergie (22) et la première extrémité (3a) de l'au moins un câble d'alimentation blindé (3) ;
- le premier convertisseur IP (10a) est relié au premier aiguilleur IP (35), ledit premier aiguilleur IP (35) étant conçu pour :
a) faire passer la tension d'alimentation, du dispositif d'alimentation en énergie (22) vers la première extrémité (3a) de l'au moins un câble d'alimentation blindé (3), et
b) transmettre des données IP entre le premier convertisseur IP (10a) et la première extrémité (3a) du câble d'alimentation blindé (3), moyennant quoi le premier convertisseur IP (10a) est relié indirectement à la première extrémité (3a) du câble d'alimentation blindé (3).

13. Ensemble de téléphonie mobile hétérogène (1) selon l'une des revendications 9 à 12, **caractérisé par** les particularités suivantes :
- le deuxième convertisseur IP (10b) est disposé entre la deuxième extrémité (3b) de l'au moins un câble d'alimentation blindé (3) et l'au moins un ensemble d'antenne (8), ledit deuxième convertisseur IP (10b) étant relié, directement ou indirectement, par son au moins une connexion de ligne de signaux (31a), à la deuxième extrémité (3b) de l'au moins un câble d'alimentation blindé (3) et étant conçu pour faire passer la tension d'alimentation, du deuxième extrémité (3b) de l'au moins un câble d'alimentation blindé (3) vers l'au moins un ensemble d'antenne (8) ;
ou
- il est prévu un deuxième aiguilleur IP (35) disposé entre la deuxième extrémité (3b) de l'au moins un câble d'alimentation blindé (3) et l'au moins un ensemble d'antenne (8), ledit deuxième convertisseur IP (10b) étant relié au deuxième aiguilleur IP (35) et étant conçu pour :
a) faire passer la tension d'alimentation, de la deuxième extrémité (3b) de l'au moins un câble d'alimentation blindé (3) vers l'au moins un ensemble d'antenne (8), et
b) transmettre des données IP entre le deuxième convertisseur IP (10b) et la deuxième extrémité (3b) du câble d'alimentation blindé (3), moyennant quoi le deuxième convertisseur IP (10b) est relié indirectement à la deuxième extrémité (3b) du câble d'alimentation blindé (3).

14. Ensemble de téléphonie mobile hétérogène (1) selon la revendication 13, **caractérisé par** la particularité suivante :
- le deuxième convertisseur IP (10b) comprend un dispositif d'alimentation (13) conçu pour prélever la tension d'alimentation de l'au moins un câble d'alimentation blindé (3) pour la fournir à l'appareil IP (11, 11a, 11b, 11c), par exemple par le biais d'une alimentation par câble Ethernet au niveau de sa connexion IP (30).

15. Ensemble de téléphonie mobile hétérogène (1) selon l'une des revendications précédentes, **caractérisé par** les particularités suivantes :
- il est prévu une station de base (2) ;
- l'au moins un câble d'alimentation blindé (3) est relié, directement ou indirectement, par sa première extrémité (3a), à la station de base (2) et, directement ou indirectement, par sa deuxième extrémité (3b), à l'au moins un ensemble d'antenne (8) ;
- il est prévu un maître AISG (5), lequel maître AISG (5) est :
a) intégré dans la station de base (2), ou
b) conçu sous la forme d'un objet matériel séparé à côté de la station de base (2) ;
- il est prévu au moins un esclave AISG (9, 9a, 9b), lequel au moins un esclave AISG (9, 9a, 9b) est :
a) intégré dans l'au moins un ensemble d'antenne (8), et/ou
b) disposé au niveau du mât d'antenne (4) ou du support d'antenne ;
- des données AISG peuvent être transmises sur l'au moins un câble d'alimentation blindé (3) entre le maître AISG (5) et l'au moins un esclave AISG (9, 9a, 9b) selon un procédé de modulation par tout ou rien.
